# EUROPEAN PATENT APPLICATION

(11) **EP 4 628 375 A1**
(43) Date of publication of application: **08.10.2025**
(21) Application number: 23910385.6
(22) Date of filing: 22.12.2023
(51) Int. Cl.: B60T 13/74, B60L 7/10, B60L 15/20, B60W 30/06, B60W 10/18

(54) **CONTROL METHOD AND APPARATUS**

(30) Priority: 30.12.2022 CN 202211721805
(71) Applicant: Shenzhen Yinwang Intelligent Technologies Co., Ltd., Shenzhen, Guangdong 518110 (CN)
(72) Inventor: ZHANG, Wuyi, Shenzhen, Guangdong 518129 (CN); CHAI, Benben, Shenzhen, Guangdong 518129 (CN); ZHANG, Binbin, Shenzhen, Guangdong 518129 (CN); JIANG, Siwen, Shenzhen, Guangdong 518129 (CN); KONG, Lingzhao, Shenzhen, Guangdong 518129 (CN); JIANG, Quan, Shenzhen, Guangdong 518129 (CN)
(74) Representative: MERH-IP Matias Erny Reichl Hoffmann Patentanwälte PartG mbB
(86) International application number: PCT/CN2023/140960
(87) International publication number: WO 2024/140459

(57) **Abstract**

A control method and apparatus are provided. The method includes: obtaining opening information of an accelerator pedal of a vehicle and gradient information; determining a motor output torque based on the opening information of the accelerator pedal and the gradient information; and determining a first hydraulic brake torque based on a required braking torque and the motor output torque. The control method and apparatus can be used in intelligent vehicles or electric vehicles, so that driving consistency of a user can be improved, and an unexpected hazard caused by inconsistent braking effects can be avoided.

## Description

This application claims priority to Chinese Patent Application No. 202211721805.6, filed with the China National Intellectual Property Administration on December 30, 2022 and entitled "CONTROL METHOD AND APPARATUS", which is incorporated herein by reference in its entirety.

### TECHNICAL FIELD

Embodiments of this application relate to the vehicle field, and more specifically, to a control method and apparatus.

### BACKGROUND

An electric vehicle or an intelligent vehicle usually has a function of implementing energy regeneration and utilization by using a motor, and can implement fast deceleration or even braking of the vehicle by controlling an accelerator pedal of the vehicle. In addition, more vehicles have a function of controlling acceleration, deceleration, or parking of the vehicle by operating an accelerator pedal, so that a frequency of stepping on a brake pedal by a user can be reduced to some extent. This improves the user's driving experience. However, use of the energy regeneration function cannot ensure consistency in braking effects of the vehicle in various braking scenarios. How to achieve consistency in the braking effects during energy regeneration based on an operating condition of the vehicle becomes a problem to be resolved.

### SUMMARY

Embodiments of this application provide a control method and apparatus, so that driving consistency of a user can be improved, and an unexpected hazard caused by inconsistent braking effects can be avoided.

According to a first aspect, a control method is provided. The method may be performed by a vehicle, or may be performed by a vehicle-mounted terminal disposed in the vehicle, or may be performed by a chip, a processor, or a circuit in the vehicle. This is not limited in embodiments of this application.

The method may include: obtaining opening information of an accelerator pedal of a vehicle and gradient information; determining a motor output torque based on the opening information of the accelerator pedal and the gradient information; and determining a first hydraulic brake torque based on a required braking torque and the motor output torque.

For example, the motor output torque may be used to control an electric brake mechanism to actuate, and the first hydraulic brake torque may be used to control a hydraulic brake mechanism to actuate.

In this application, the actuation of the electric brake mechanism is associated with the gradient information, and a hydraulic brake torque is determined based on the required braking torque and the motor output torque, so that driving consistency of a user can be improved, and an unexpected hazard caused by inconsistent braking effects can be avoided.

With reference to the first aspect, in some implementations of the first aspect, the motor output torque may include an energy regeneration torque and a gradient compensation torque. The determining a motor output torque based on the opening information of the accelerator pedal and the gradient information may include: determining the energy regeneration torque based on the opening information of the accelerator pedal and vehicle speed information; and determining the gradient compensation torque based on the gradient information.

For example, a gradient compensation torque of the vehicle in a current gradient scenario may be determined based on a vehicle weight and/or a vehicle load.

In practice, the motor output torque usually needs to be calibrated, to achieve a better braking effect. In this application, the motor output torque is further refined, and the energy regeneration torque and the gradient compensation torque are distinguished, so that calibration of the motor output torque can be simplified.

With reference to the first aspect, in some implementations of the first aspect, the determining the gradient compensation torque based on the gradient information may include: determining the gradient compensation torque based on the gradient information and the vehicle speed information.

In this application, the gradient compensation torque is determined based on the gradient information and the vehicle speed information. In this way, in a braking process of the vehicle, an appropriate gradient compensation torque can be applied to the vehicle based on a current speed of the vehicle, so that control over the electric brake mechanism can be smoother in the braking process of the vehicle, and the braking process of the vehicle is smoother.

With reference to the first aspect, in some implementations of the first aspect, the method further includes: obtaining a first anti-rollback characteristic torque, where the first anti-rollback characteristic torque is a torque required to prevent the vehicle from rolling back when the vehicle parks. The determining the gradient compensation torque based on the gradient information may include: determining the gradient compensation torque based on the gradient information when a vehicle speed is greater than or equal to a first threshold; or determining the gradient compensation torque based on the gradient information and the first anti-rollback characteristic torque when a vehicle speed is less than a first threshold.

For example, the first threshold may be any value, for example, 2 kilometers per hour (kilometers per hour, km/h) or 2.5 km/h.

When the vehicle speed is less than the first threshold, the vehicle may park. In this application, when the vehicle speed is less than the first threshold, based on an anti-rollback torque required when the vehicle parks, the vehicle can be prevented from rolling back when the vehicle parks. This ensures safety of the vehicle and a person.

With reference to the first aspect, in some implementations of the first aspect, the determining the gradient compensation torque based on the gradient information and the first anti-rollback characteristic torque when a vehicle speed is less than a first threshold may include: determining a variation relationship between the gradient compensation torque and the vehicle speed based on a first gradient compensation characteristic torque and the first anti-rollback characteristic torque, where the first gradient compensation characteristic torque is a gradient compensation torque needed when the vehicle speed of the vehicle is equal to the first threshold; and determining the gradient compensation torque based on the vehicle speed information and the variation relationship between the gradient compensation torque and the vehicle speed when the vehicle speed is less than the first threshold.

For example, the gradient compensation torque of the vehicle present when the vehicle speed is equal to the first threshold, namely, the first gradient compensation characteristic torque, may also be determined based on the gradient information.

In this application, in a process in which the vehicle brakes until the vehicle is in a standstill state, the gradient compensation torque is smoothly transited from the first gradient compensation characteristic torque to the first anti-rollback characteristic torque, so that user experience can be improved.

With reference to the first aspect, in some implementations of the first aspect, the method may further include: obtaining energy regeneration power information. The determining the energy regeneration torque based on the opening information of the accelerator pedal and vehicle speed information may include: determining the energy regeneration torque based on the opening information of the accelerator pedal, the vehicle speed information, and the energy regeneration power information.

In this application, a limitation of a motor, a battery, or the like on regeneration power in an energy regeneration process is considered, so that an actual braking effect of the vehicle can be made consistent with an expected braking effect based on an actual energy regeneration status.

With reference to the first aspect, in some implementations of the first aspect, the vehicle may include a first electric brake mechanism and a second electric brake mechanism. The method may further include: based on the motor output torque, allocating a first motor output torque to the first electric brake mechanism and allocating a second motor output torque to the second electric brake mechanism; and based on operating conditions of the first motor output torque and the second motor output torque, adjusting the first motor output torque allocated to the first electric brake mechanism and adjusting the second motor output torque allocated to the second electric brake mechanism.

In this application, the motor output torque allocated to the plurality of electric brake mechanisms is adjusted, so that consistency in braking effects can be achieved, and an energy regeneration rate can be improved.

With reference to the first aspect, in some implementations of the first aspect, the vehicle includes a hydraulic brake system. The method may further include: controlling braking of the vehicle through the hydraulic brake system based on the first hydraulic brake torque.

In this application, the hydraulic brake system is combined to control braking of the vehicle, so that a situation such as slipping or rollback of the vehicle due to braking of the vehicle by using only the electric brake mechanism in some scenarios can be prevented, and consistency in braking effects can be ensured.

With reference to the first aspect, in some implementations of the first aspect, the method may further include: obtaining a first brake torque, where the first brake torque is a brake torque applied by the hydraulic brake system to the vehicle. The controlling braking of the vehicle through the hydraulic brake system based on the first hydraulic brake torque may include: controlling braking of the vehicle based on the first hydraulic brake torque, the first brake torque, and the hydraulic brake system.

In this application, through closed-loop control over the hydraulic brake system, a braking effect of the hydraulic brake system can be made consistent with a set expectation, to ensure consistency in braking effects.

With reference to the first aspect, in some implementations of the first aspect, the method may further include: determining the required braking torque based on a driving mode of the vehicle and/or user indication information.

In this application, differentiated settings of braking effects in different driving modes can be implemented, to improve user experience.

With reference to the first aspect, in some implementations of the first aspect, the method may further include: when an opening of the accelerator pedal is less than or equal to a preset threshold, controlling, based on the motor output torque and the first hydraulic brake torque, braking of the vehicle until the vehicle is in a standstill state; and setting the motor output torque to zero when duration in which the vehicle is in the standstill state is greater than or equal to first duration.

In this application, the motor output torque is maintained within the first duration after the vehicle parks. This helps ensure braking of the vehicle when a hydraulic brake fault occurs, and can avoid an unexpected hazard caused by a hydraulic brake failure.

With reference to the first aspect, in some implementations of the first aspect, the method may further include: when the duration in which the vehicle is in the standstill state is greater than or equal to second duration, enabling a park brake function, and setting the first hydraulic brake torque to zero, where the second duration is greater than the first duration.

In this application, excessive use of the hydraulic brake system after the vehicle brakes can be reduced, and a service life of the hydraulic brake system can be prolonged.

With reference to the first aspect, in some implementations of the first aspect, the method may further include: determining, based on the gradient information, a variation relationship between the motor output torque and the vehicle speed.

In this application, the variation relationship between the motor output torque and the vehicle speed is determined based on a gradient, so that the variation relationship can be better applied to various gradient scenarios, and consistency in braking effects can be implemented.

According to a second aspect, a control apparatus is provided. The apparatus may include: an obtaining unit, configured to obtain opening information of an accelerator pedal of a vehicle and gradient information; and a processing unit, configured to: determine a motor output torque based on the opening information of the accelerator pedal and the gradient information; and determine a first hydraulic brake torque based on a required braking torque and the motor output torque.

With reference to the second aspect, in some implementations of the second aspect, the motor output torque may include an energy regeneration torque and a gradient compensation torque. The processing unit may be configured to: determine the energy regeneration torque based on the opening information of the accelerator pedal and vehicle speed information; and determine the gradient compensation torque based on the gradient information.

With reference to the second aspect, in some implementations of the second aspect, the processing unit may be configured to determine the gradient compensation torque based on the gradient information and the vehicle speed information.

With reference to the second aspect, in some implementations of the second aspect, the obtaining unit may be further configured to obtain a first anti-rollback characteristic torque, where the first anti-rollback characteristic torque is a torque required to prevent the vehicle from rolling back when the vehicle parks. The processing unit may be configured to: determine the gradient compensation torque based on the gradient information when a vehicle speed is greater than or equal to a first threshold; or determine the gradient compensation torque based on the gradient information and the first anti-rollback characteristic torque when a vehicle speed is less than a first threshold.

With reference to the second aspect, in some implementations of the second aspect, the processing unit may be configured to determine a variation relationship between the gradient compensation torque and the vehicle speed based on a first gradient compensation characteristic torque and the first anti-rollback characteristic torque, where the first gradient compensation characteristic torque is a gradient compensation torque needed when the vehicle speed of the vehicle is equal to the first threshold; and determine the gradient compensation torque based on the vehicle speed information and the variation relationship between the gradient compensation torque and the vehicle speed when the vehicle speed is less than the first threshold.

With reference to the second aspect, in some implementations of the second aspect, the obtaining unit may be further configured to obtain energy regeneration power information. The processing unit may be configured to determine the energy regeneration torque based on the opening information of the accelerator pedal, the vehicle speed information, and the energy regeneration power information.

With reference to the second aspect, in some implementations of the second aspect, the vehicle may include a first electric brake mechanism and a second electric brake mechanism. The processing unit may be further configured to: based on the motor output torque, allocate a first motor output torque to the first electric brake mechanism and allocate a second motor output torque to the second electric brake mechanism; and based on operating conditions of the first motor output torque and the second motor output torque, adjust the first motor output torque allocated to the first electric brake mechanism and adjust the second motor output torque allocated to the second electric brake mechanism.

With reference to the second aspect, in some implementations of the second aspect, the vehicle may include a hydraulic brake system. The processing unit may be further configured to control braking of the vehicle through the hydraulic brake system based on the first hydraulic brake torque.

With reference to the second aspect, in some implementations of the second aspect, the obtaining unit may be further configured to obtain a first brake torque, where the first brake torque is a brake torque applied by the hydraulic brake system to the vehicle. The processing unit may be configured to control braking of the vehicle through the hydraulic brake system based on the first hydraulic brake torque and the first brake torque.

With reference to the second aspect, in some implementations of the second aspect, the processing unit may be further configured to determine the required braking torque based on a driving mode of the vehicle and/or user indication information.

With reference to the second aspect, in some implementations of the second aspect, the processing unit may be further configured to: when an opening of the accelerator pedal is less than or equal to a preset threshold, control, based on the motor output torque and the first hydraulic brake torque, braking of the vehicle until the vehicle is in a standstill state; and set the motor output torque to zero when duration in which the vehicle is in the standstill state is greater than or equal to first duration.

With reference to the second aspect, in some implementations of the second aspect, the processing unit may be further configured to: when the duration in which the vehicle is in the standstill state is greater than or equal to second duration, enable a park brake function, and set the first hydraulic brake torque to zero, where the second duration is greater than the first duration.

With reference to the second aspect, in some implementations of the second aspect, the processing unit may be further configured to determine, based on the gradient information, a variation relationship between the motor output torque and the vehicle speed.

According to a third aspect, a control apparatus is provided. The apparatus includes: a memory, configured to store a computer program; and a processor, configured to execute the computer program stored in the memory, to enable the apparatus to perform the method according to the first aspect and any one of the possible implementations of the first aspect.

According to a fourth aspect, a vehicle is provided. The vehicle includes the apparatus according to the second aspect, the third aspect, and any one of the possible implementations of the second aspect and the third aspect.

According to a fifth aspect, a computer-readable storage medium is provided. The computer-readable medium stores a computer program. When the computer program is run on a computer, the computer is enabled to perform the method according to any possible implementation of the first aspect.

According to a sixth aspect, a computer program product is provided. The computer program product includes computer program code. When the computer program code is run on a computer, the computer is enabled to perform the method according to any possible implementation of the first aspect.

According to a seventh aspect, a chip is provided. The chip includes a circuit, configured to perform the method according to any possible implementation of the first aspect.

### BRIEF DESCRIPTION OF DRAWINGS

FIG. 1 is a functional block diagram of an intelligent driving device according to an embodiment of this application;
FIG. 2 is a diagram of a system architecture according to an embodiment of this application;
FIG. 3 is a schematic flowchart of a control method according to an embodiment of this application;
FIG. 4 is a diagram of a method for determining braking demand information of a vehicle according to an embodiment of this application;
FIG. 5 is a diagram of a human-vehicle interaction scenario according to an embodiment of this application;
FIG. 6 is a diagram of a manner of allocating a brake torque according to an embodiment of this application;
FIG. 7 is a diagram of a manner of determining a motor output torque according to an embodiment of this application;
FIG. 8 is a diagram of a manner of determining a driving intention based on an opening of an accelerator pedal according to an embodiment of this application;
FIG. 9 is a diagram of a method for controlling parking of a vehicle according to an embodiment of this application;
FIG. 10 is a diagram of another method for controlling parking of a vehicle according to an embodiment of this application;
FIG. 11 is a diagram of a process of controlling a hydraulic brake mechanism according to an embodiment of this application;
FIG. 12 is a diagram of a process of controlling braking of a vehicle according to an embodiment of this application;
FIG. 13 is a schematic flowchart of another control method according to an embodiment of this application;
FIG. 14 is a schematic flowchart of another control method according to an embodiment of this application;
FIG. 15 is a block diagram of a control apparatus according to an embodiment of this application; and
FIG. 16 is a block diagram of another control apparatus according to an embodiment of this application.

### DESCRIPTION OF EMBODIMENTS

The following describes technical solutions of embodiments in this application with reference to the accompanying drawings.

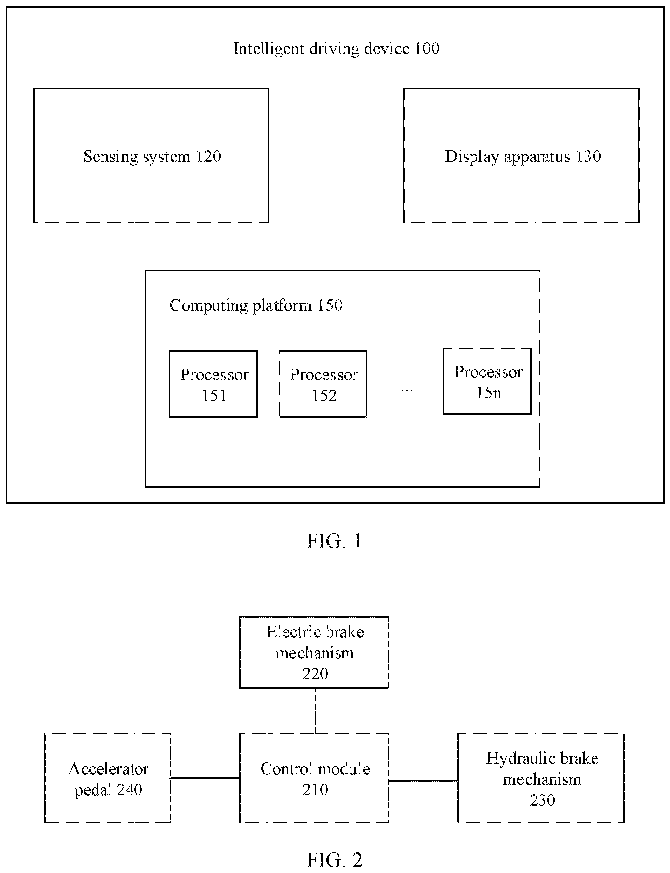

FIG. 1 is a functional block diagram of an intelligent driving device 100 according to an embodiment of this application. The intelligent driving device 100 may include a sensing system 120, a display apparatus 130, and a computing platform 150. The sensing system 120 may include one or more sensors that sense ambient environment information of the intelligent driving device 100. For example, the sensing system 120 may include a positioning system. The positioning system may be a global positioning system (global positioning system, GPS), a BeiDou system, or another positioning system. The sensing system 120 may alternatively include one or more of an inertial measurement unit (inertial measurement unit, IMU), a lidar, a millimeter-wave radar, an ultrasonic radar, and a camera apparatus.

Some or all functions of the intelligent driving device 100 may be controlled by the computing platform 150. The computing platform 150 may include one or more processors, for example, processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may include a memory. The memory is configured to store instructions. Some or all of the processors 151 to 15n may invoke the instructions in the memory, to implement a corresponding function.

The intelligent driving device 100 in this application may include a transportation tool on a road, a transportation tool on water, an air transportation tool, an industrial device, an agricultural device, an entertainment device, or the like. For example, the intelligent driving device 100 may be a vehicle. The vehicle is a vehicle in a broad sense, and may be a transportation tool (for example, a commercial vehicle, a passenger vehicle, a motorcycle, an airborne vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application. For another example, the intelligent driving device 100 may be a transportation tool such as an airplane or a ship.

For example, FIG. 2 is a diagram of a system architecture according to an embodiment of this application. As shown in FIG. 2, the system architecture may include a control module, a hydraulic brake mechanism, and an electric brake mechanism. For example, the intelligent driving device 100 shown in FIG. 1 may include a control module 210, an electric brake mechanism 220, a hydraulic brake mechanism 230, and an accelerator pedal 240 in the system architecture. The control module 210 controls the electric brake mechanism 220 and/or the hydraulic brake mechanism 230, so that the intelligent driving device can be braked.

For example, the control module 210 may be configured to: obtain accelerator pedal opening information of the accelerator pedal 240, and control the electric brake mechanism 220 and/or the hydraulic brake mechanism 230 based on the opening information of the accelerator pedal, to implement a brake function. In an embodiment, when the intelligent driving device brakes on a ramp until the intelligent driving device parks,

In an embodiment, the control module 210 may include one or more chips and a processing apparatus such as a processor. In another embodiment, the control module 210 may be located on the computing platform 150.

For example, in a braking process of the intelligent driving device, the electric brake mechanism 220 converts kinetic energy of the intelligent driving device into electric energy, so that a braking energy regeneration function can be implemented. This improves driving experience and energy utilization.

In an embodiment, the electric brake mechanism 220 may include an energy conversion apparatus, and the energy conversion apparatus may be connected to an energy storage apparatus. The energy conversion apparatus can convert kinetic energy of the intelligent driving device into electric energy, and the energy storage apparatus can store the electric energy and supply the electric energy to the intelligent driving device for use. For example, the energy conversion apparatus may be a motor, and the energy storage apparatus may be a battery. For another example, the motor may have a plurality of operating modes, for example, a driving mode and a braking mode. In the driving mode, the motor may provide a driving force for the intelligent driving device. In the braking mode, the motor may provide a braking force for the intelligent driving device.

For example, the hydraulic brake mechanism 230 may provide a braking force for the intelligent driving device in a hydraulic brake manner.

In some possible implementations, the system architecture may also include a park brake mechanism, and the control module 210 enables the intelligent driving device to be in a standstill state by using the park brake mechanism.

As described above, a vehicle that can implement acceleration and deceleration functions based on an opening of an accelerator pedal can reduce operations performed by a user on a brake pedal to some extent, and improve user experience. In addition, the vehicle may be braked in an energy regeneration manner, to improve energy utilization. However, because an actual driving scenario is complex, it may be difficult to maintain consistency in braking effects in different scenarios, for example, an uphill scenario or a downhill scenario, a scenario in which the vehicle is on a low-adhesion road surface, or a scenario in which a motor braking capability is limited. Consequently, a braking effect of the vehicle may deviate from an expectation of a driver, which affects safety of the vehicle and a member in the vehicle. In this embodiment of this application, a motor output torque is associated with gradient information, and a hydraulic brake torque is determined based on a required braking torque and the motor output torque, so that the user's driving consistency can be improved, and an unexpected hazard caused by inconsistent braking effects can be avoided.

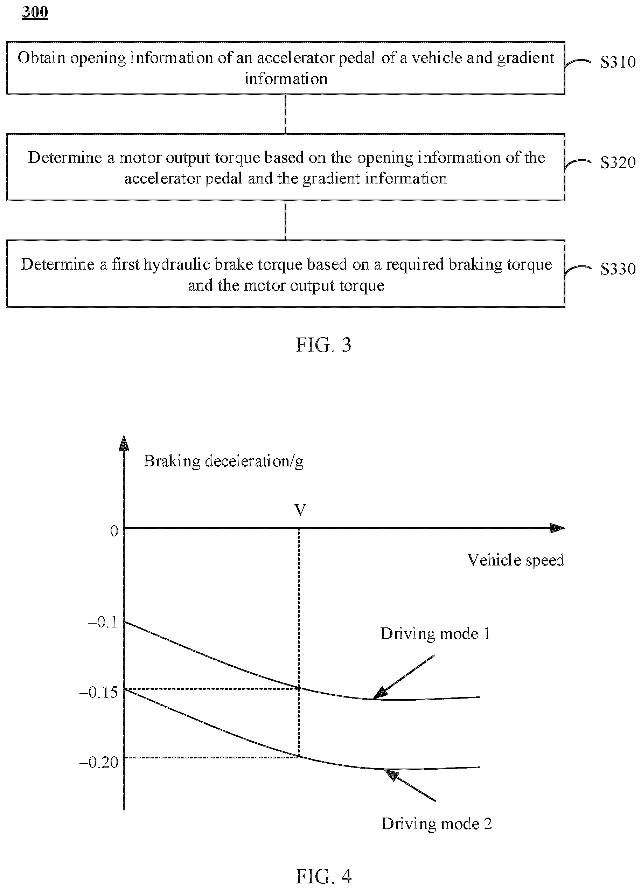

For example, FIG. 3 is a schematic flowchart of a control method according to an embodiment of this application. The method 300 may be performed by the intelligent driving device (for example, a vehicle), or may be performed by the computing platform or another control apparatus, or may be performed by a chip, a processor, or the like in the computing platform or the control apparatus.

In an embodiment, the method may be performed by a vehicle domain controller. In another embodiment, the method may be performed by a chip or a processing circuit of a vehicle domain controller.

S310: Obtain opening information of an accelerator pedal of a vehicle and gradient information.

For example, the vehicle may be provided with a sensor such as a pedal travel sensor that is configured to sense an opening of the accelerator pedal.

For example, the vehicle may also be provided with a sensor such as a gradient sensor or an inertia sensor that is directly or indirectly configured to sense gradient information.

In an embodiment, when the computing platform or the another control apparatus performs the method, the computing platform or the control apparatus may directly obtain the required opening information of the accelerator pedal and the required gradient information from the sensor, or may obtain the opening information of the accelerator pedal and the gradient information from another apparatus by using an internal circuit of the vehicle.

S320: When the vehicle is in a traveling state, determine a motor output torque based on the opening information of the accelerator pedal and the gradient information.

For example, a driving intention of a driver may be determined based on the opening information of the accelerator pedal. When the driver has a braking intention, the motor output torque may be determined based on the information about the accelerator pedal and the gradient information, to control an electric brake mechanism to actuate to brake the vehicle.

In some possible implementations, the vehicle may support a plurality of pedal operation modes, for example, a single pedal mode and a dual pedal mode. In the dual pedal mode, an accelerator pedal may be configured to control the vehicle to accelerate, and a brake pedal may be configured to control the vehicle to decelerate. In the single pedal mode, an accelerator pedal may be configured to control the vehicle to accelerate or decelerate, to reduce operations performed by a user on a brake pedal, and improve the user's driving experience.

In an embodiment, when the vehicle is in the single pedal mode, it may be determined, based on the opening information of the accelerator pedal, that the driver has a braking intention. The motor output torque may be determined based on the opening information of the accelerator pedal and the gradient information.

S330: When the motor output torque is less than or equal to a required braking torque of the vehicle, determine a first hydraulic brake torque based on the required braking torque and the motor output torque.

For example, a braking process of the vehicle needs to be controlled, to implement consistency in braking effects of the vehicle in different driving scenarios. For example, the braking effect may be measured based on a braking deceleration, a braking distance, or the like of the vehicle. A brake torque required by the vehicle to achieve an expected braking effect may be referred to as a required braking torque.

For example, when the motor output torque cannot meet the required braking torque, a hydraulic brake torque may be determined based on the required braking torque and the motor output torque, to control a hydraulic brake system to actuate. The hydraulic brake torque may also be referred to as the first hydraulic brake torque.

In an embodiment, the hydraulic brake system may include, for example, the hydraulic brake mechanism 230 shown in FIG. 2.

In some possible implementations, in the braking process, an actual braking parameter or an actual braking effect of the brake mechanism of the vehicle may be obtained. In this scenario, the required braking torque may also be a target brake torque, namely, a brake torque that the brake mechanism is expected to achieve, to be distinguished from an actual brake torque of the brake mechanism. When the brake mechanism can meet an expected braking demand, or a difference between the actual brake torque and an expected brake torque is within an allowable deviation, the actual torque of the brake mechanism may be considered as the target brake torque of the brake mechanism. For example, a torque that the electric brake mechanism is expected to achieve may be referred to as a target motor output torque. When the electric brake mechanism is controlled, based on the target brake torque, to actuate, the target motor output torque may be used as the motor output torque. For another example, a torque that the hydraulic brake mechanism is expected to achieve may be referred to as a target hydraulic brake torque, and may be used as the hydraulic brake torque.

In some possible implementations, the electric brake mechanism may brake the vehicle in an energy regeneration manner.

Because different gradient information may be involved in an actual braking scenario, the motor output torque needs to be calibrated, to achieve a better braking effect. For example, to facilitate calibration of the motor output torque, the motor output torque may be classified into an energy regeneration torque and a gradient compensation torque. The energy regeneration torque may be understood as a part that is of the motor output torque and that does not change with a gradient, so that the energy regeneration torque can be calibrated in a flat-road scenario. The gradient compensation torque may be understood as a part that affects the motor output torque due to existence of a gradient. Therefore, the energy regeneration torque is compensated in an uphill scenario/a downhill scenario, to control the electric brake mechanism in different scenarios.

In an embodiment, a gradient compensation torque required for the vehicle when the vehicle travels on a ramp may be estimated based on a curb weight of the vehicle and the gradient information. In another embodiment, a vehicle load may be obtained, and the gradient compensation torque is determined based on a vehicle weight, the vehicle load, and the gradient information. In another embodiment, gradient compensation information may be determined based on the gradient information and vehicle speed information, to smoothly control the electric brake mechanism.

For example, a variation relationship between the motor output torque and the vehicle speed may be determined based on the gradient information, so that the motor output torque can be better adapted to a driving scenario.

In some possible implementations, when the vehicle brakes in an energy regeneration manner, a braking effect of the electric brake mechanism may be affected by energy regeneration power.

For example, the energy regeneration power of the electric brake mechanism may be affected by factors such as performance and an operating condition of an energy conversion apparatus and/or an energy storage apparatus of the vehicle. For example, in an actual scenario, the energy regeneration power may be affected by factors such as an environmental condition (for example, an excessively high or low ambient temperature), a state of charge (state of charge, SOC) of a battery, and a battery life. Energy regeneration power supported by the battery may be briefly referred to as battery regeneration power. For another example, in an actual scenario, energy regeneration power supported by a motor (briefly referred to as a motor regeneration power) may be affected by an environmental condition such as an ambient temperature and an ambient atmospheric pressure, and factors such as a motor life and an operating load. For another example, the energy regeneration power may be also affected by consumed power of a power-consuming device of the vehicle, for example, consumed power of a power-consuming device such as an on-board display, a sound system, an air conditioner, or a cockpit domain controller.

For example, determining the motor output torque based on the opening information of the accelerator pedal and the gradient information may include: determining the motor output torque based on the opening information of the accelerator pedal, the gradient information, and the energy regeneration power.

In some possible implementations, the vehicle may include a plurality of electric brake mechanisms, for example, may include a plurality of motors configured to convert energy. A target motor output torque may be allocated to each of the plurality of electric brake mechanisms based on the determined motor output torque.

In an embodiment, the vehicle includes a first electric brake mechanism and a second electric brake mechanism. Based on the motor output torque determined based on the opening information of the accelerator pedal, a first motor output torque may be allocated to the first electric brake mechanism and a second motor output torque may be allocated to the second electric brake mechanism.

In another embodiment, the vehicle may include more or fewer electric brake mechanisms. For example, the vehicle may include a motor 1, a motor 2, and a motor 3 that are configured to brake, and allocate a first motor output torque, a second motor output torque, and a third motor output torque to the motor 1, the motor 2, and the motor 3 respectively.

It should be understood that a sum of target motor output torques (for example, the first motor output torque and the second motor output torque) corresponding to the plurality of electric brake mechanisms may be equal to the motor output torque determined based on the opening information of the accelerator pedal.

In some possible implementations, when an actuation function of one or more electric brake mechanisms is limited, the target motor output torques allocated to the plurality of electric brake mechanisms may be adjusted based on operating conditions of the plurality of electric brake mechanisms. For example, the vehicle includes the first electric brake mechanism and the second electric brake mechanism. When actuation of the first electric brake mechanism or the second electric brake mechanism is limited, the first motor output torque allocated to the first electric brake mechanism and the second motor output torque allocated to the second electric brake mechanism may be adjusted based on an operating condition of the first electric brake mechanism and/or the second electric brake mechanism.

In some possible implementations, an actual brake torque applied by the hydraulic brake system to the vehicle may be obtained. The brake torque may be referred to as an actual hydraulic brake torque, or may be referred to as a first brake torque.

For example, braking of the vehicle can be controlled in a closed loop through the hydraulic brake system based on the first hydraulic brake torque and the first brake torque.

In some possible implementations, the vehicle may include a plurality of driving modes, for example, a comfort mode, a sport mode, and an economic mode. In different driving modes, the vehicle may have different expected braking effects, and braking of the vehicle is controlled based on the expected braking effects. For example, in different driving modes, braking of the vehicle may be controlled based on different target braking decelerations.

For example, an expected braking effect may be determined based on user indication information.

In some possible implementations, when the vehicle speed is less than a first threshold, if an opening of the accelerator pedal is less than or equal to a preset value (for example, 5% or 6%), it may be determined that the driver has an intention to park the vehicle. However, in an uphill scenario or a downhill scenario, in a braking process in which the vehicle speed gradually decreases to zero, the vehicle may roll back.

In the uphill scenario, the downhill scenario, or the flat-road scenario, different torques are required to prevent the vehicle from rolling back when the vehicle parks. The torque for preventing the vehicle from rolling back when the vehicle stops may be referred to as a first anti-rollback characteristic torque.

For example, determining the gradient compensation torque based on the gradient information may include: determining the gradient compensation torque based on the gradient information when the vehicle speed is greater than or equal to the first threshold; or determining the gradient compensation torque based on the gradient information and the first anti-rollback characteristic torque when the vehicle speed is less than the first threshold.

In some possible implementations, a gradient compensation torque present when the vehicle speed is the first threshold (which may be referred to as a first gradient compensation characteristic torque) may be obtained, and a variation relationship between the gradient compensation torque and the vehicle speed is determined based on the gradient compensation torque and the first anti-rollback characteristic torque. For example, a curve of the gradient compensation torque changing with the vehicle speed may be determined based on a linear function, a quadratic function, a cubic spline function, a piecewise function, or the like.

In some possible implementations, when the vehicle speed is less than the first threshold, the gradient compensation torque may be determined based on the vehicle speed information and the variation relationship between the gradient compensation torque and the vehicle speed. For example, a gradient compensation torque corresponding to a current vehicle speed of the vehicle is determined based on the determined curve of the gradient compensation torque changing with the vehicle speed, to implement smooth transition of the gradient compensation torque.

In an embodiment, a scenario in which the gradient information is less than or equal to a gradient threshold may be determined as a flat-road scenario. The gradient threshold may be 0.5 degree, 1 degree, or another value.

In some possible implementations, braking of the vehicle may be controlled until the vehicle is in a standstill state.

In an embodiment, when the vehicle is in the standstill state and duration in which the vehicle is in the standstill state is greater than or equal to first duration, the motor output torque may be set to zero.

In another embodiment, when the vehicle is in the standstill state and duration in which the vehicle is in the standstill state is greater than or equal to second duration, a park brake function may be enabled, and the first hydraulic brake torque is set to zero. The first duration and the second duration may be any duration, and the second duration may be greater than the first duration. For example, the first duration is 30 seconds (seconds, s) or 1 minute (minute, min), and the second duration may be 5 min or 8 min.

For example, FIG. 4 is a diagram of a method for determining braking demand information of a vehicle according to an embodiment of this application. That an intelligent driving device is a vehicle is used for description below.

For example, the vehicle may include a plurality of driving modes, for example, a comfort mode, a sport mode, and an economic mode. A user (for example, a developer) may arrange corresponding expected braking effects for different driving modes of the vehicle, and the braking effect of the vehicle may be reflected as a braking deceleration of the vehicle.

In an embodiment, an example in which the vehicle may separately travel in a driving mode 1 and a driving mode 2 is used. In a braking process of the vehicle, when a vehicle speed is V, if the vehicle is in the driving mode 1, a target braking deceleration of the vehicle may be - 0.15 gravitational acceleration (gravitational acceleration, g); or if the vehicle is in the driving mode 2, a target braking deceleration of the vehicle may be -0.20 g, as shown in FIG. 4. The target braking deceleration may represent a braking deceleration that the vehicle is expected to achieve in a braking process. The vehicle is controlled to brake based on the target braking deceleration, which is distinct from an actual braking deceleration experienced by the vehicle due to an action of a brake mechanism.

For example, to improve riding comfort in a braking process, an expected braking effect of the vehicle may also be determined based on a movement status of the vehicle. For example, the driving mode 1 shown in FIG. 4 is used. In a braking process of the vehicle, when the vehicle speed changes from V to 0, the target braking deceleration of the vehicle may change from -0.15 g to -0.1 g. A negative value may indicate that a direction of the braking deceleration is opposite to a traveling direction of the vehicle.

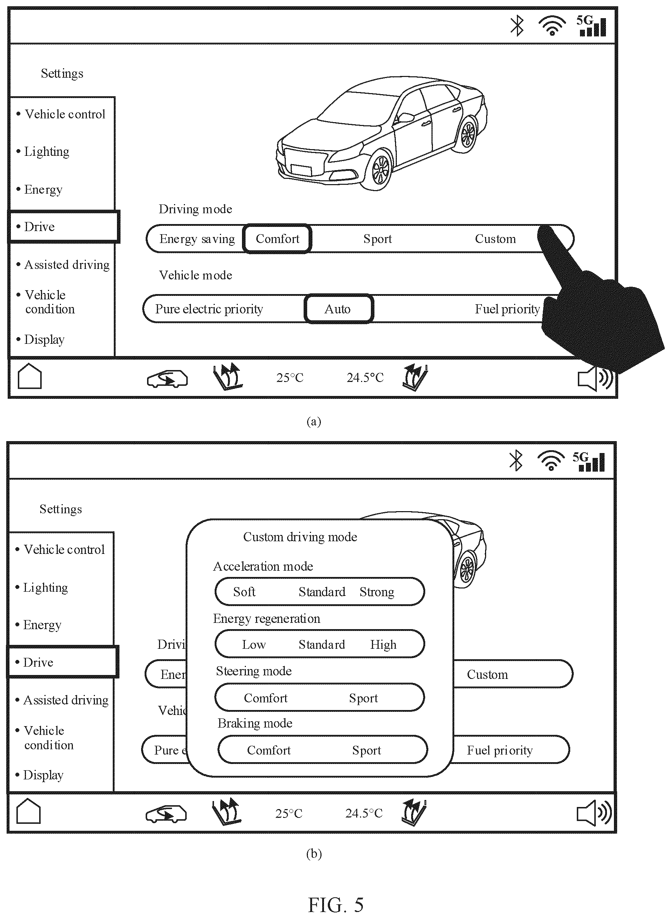

In some possible implementations, an expected braking effect may also be determined based on user indication information. Descriptions are provided below with reference to FIG. 5.

FIG. 5 is a diagram of a human-vehicle interaction scenario according to an embodiment of this application.

For example, a graphical user interface in FIG. 5 may be an interface displayed on an on-board display (for example, a central control screen) when a user interacts with a vehicle through the display. It should be understood that human-computer interaction may be further performed through a voice, a gesture instruction, or the like. This is not limited in embodiments of this application.

In an embodiment, the user may set a driving-related mode on an interface shown in (a) in FIG. 5. For example, the user may indicate a driving mode of the vehicle as "Energy saving", "Comfort", or "Sport".

In another embodiment, the vehicle may support the user in defining a driving preference of the user. For example, when it is detected that the user selects a "Custom" item shown in (a) in FIG. 5, a graphical user interface shown in (b) in FIG. 5 may be displayed.

In another embodiment, an indication of the driving preference of the user may be obtained the graphical user interface shown in (b) in FIG. 5. For example, the user may set one or more performance modes of the vehicle, such as acceleration, energy regeneration, steering, and braking, and may determine, based on the obtained indication information, an expected effect of the vehicle during braking, steering, or the like.

It should be understood that the driving mode and the like shown in FIG. 5 are merely examples, and there may be another classification manner. This is not limited in embodiments of this application.

For example, a required braking torque may be determined based on a target braking deceleration of the vehicle, a vehicle load, and the like, to control a braking process of the vehicle.

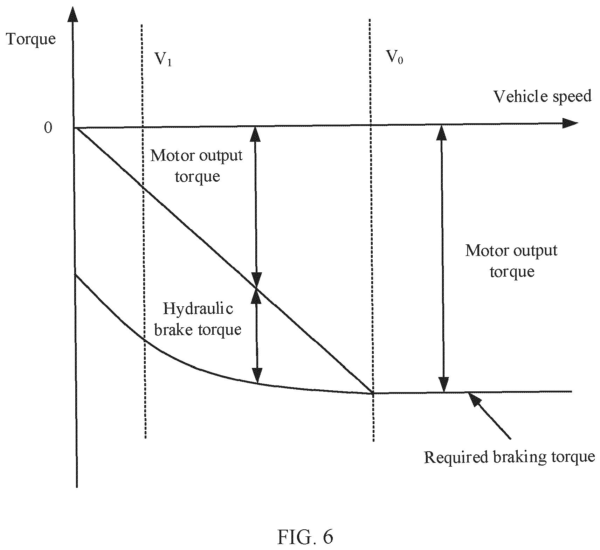

For example, FIG. 6 is a diagram of a manner of allocating a brake torque according to an embodiment of this application.

Because kinetic energy of a vehicle varies with a vehicle speed in a braking process of the vehicle, regenerative energy in the braking process also varies with the vehicle speed. A brake torque that can be provided by an electric brake mechanism achieving a braking effect based on an energy regeneration function can be reduced as the vehicle speed decreases.

For example, it is assumed that a brake torque provided by the electric brake mechanism when the vehicle speed of the vehicle is greater than a second threshold (denoted as V0) can meet a required braking torque of the vehicle. Because the regenerative energy is reduced when the vehicle speed of the vehicle is less than or equal to the second threshold, a motor output torque and a hydraulic brake torque need to be combined to meet the required braking torque of the vehicle. The second threshold may be preset, or may be determined based on an actual braking effect. This is not limited in embodiments of this application.

In an embodiment, as shown in FIG. 6, before the vehicle during traveling brakes, the vehicle speed of the vehicle is greater than V0. In a process of controlling braking of the vehicle, when the vehicle speed of the vehicle is greater than V0, braking performance of the electric brake mechanism may meet a requirement for the required braking torque, and the vehicle may be braked by using only the electric brake mechanism. In other words, a target motor output torque may be determined based on the required braking torque. A negative value of a torque may indicate that a direction of a braking force corresponding to the torque is opposite to a traveling direction of the vehicle.

In another embodiment, as shown in FIG. 6, when the vehicle speed is less than V0, performance of the electric brake mechanism may not meet a requirement for the required braking torque, or an effect of braking the vehicle by using only the electric brake mechanism may not meet an expected braking effect. In this case, the electric brake mechanism and a hydraulic brake mechanism may be combined to brake the vehicle. In a process of controlling braking of the vehicle, the required braking torque may be classified into a motor output torque and a target hydraulic brake torque, and the electric brake mechanism and the hydraulic brake mechanism are coordinated to brake the vehicle.

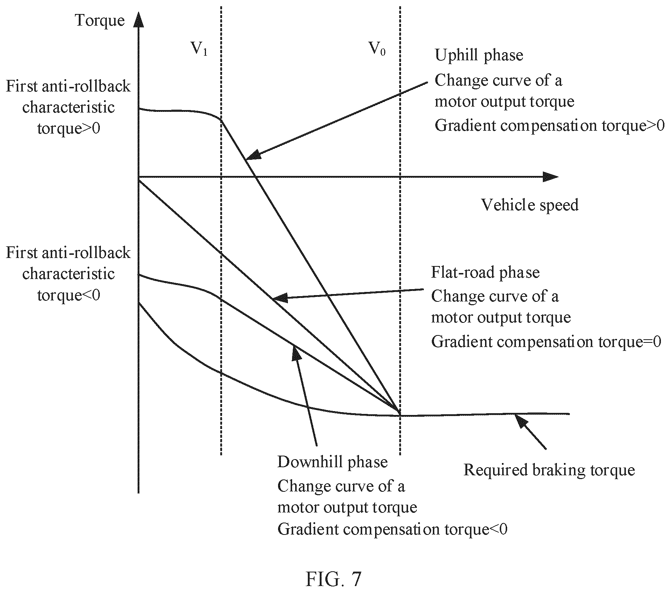

For example, FIG. 7 is a diagram of a manner of determining a motor output torque according to an embodiment of this application.

In an uphill scenario, some kinetic energy of the vehicle is converted into potential energy in a braking process of a vehicle. In a downhill scenario, some potential energy of the vehicle is converted into kinetic energy in a braking process of the vehicle. Gradient information of a ramp on which the vehicle is located affects actuation of an electric brake mechanism based on energy regeneration.

For example, a motor output torque may be determined based on the gradient information.

In an embodiment, a variation relationship between the motor output torque and a vehicle speed may be determined based on the gradient information. For example, as shown in FIG. 7, in a vehicle speed interval from V1 to V0, an absolute value of a slope of the motor output torque changing with the vehicle speed in the uphill scenario is greater than an absolute value of a slope of the motor output torque changing with the vehicle speed in the downhill scenario, and an absolute value of a slope of the motor output torque changing with the vehicle speed in a flat-road scenario may be between the foregoing two absolute values. In other words, at a same vehicle speed, an absolute value of a target motor output torque in the uphill scenario is less than an absolute value of a target motor output torque in the uphill scenario, and an absolute value of a target motor output torque in the flat-road scenario may be between the foregoing two absolute values. For another example, in the uphill scenario, when the vehicle is at different gradients, a variation relationship between the target motor output torque and the vehicle speed may also be different.

In another embodiment, because some kinetic energy of the vehicle is converted into potential energy in the uphill scenario, a braking force corresponding to the motor output torque may also be the same as a traveling direction of the vehicle. To be specific, although a traveling state of the vehicle is reflected as that the vehicle is in a braking process in which the vehicle speed gradually decreases, a force corresponding to a torque applied or required to be applied by the electric brake mechanism may also be the same as the traveling direction of the vehicle, to prevent the vehicle from rolling back due to gravity.

As mentioned above, the motor output torque needs to be calibrated, to achieve a better braking effect. To facilitate calibration of the motor output torque, the motor output torque may be classified into an energy regeneration torque and a gradient compensation torque.

For example, the gradient compensation torque may be determined based on the gradient information. For example, as shown in FIG. 7, the gradient compensation torque included in the motor output torque in the flat-road scenario may be 0, the gradient compensation torque in the motor output torque in the downhill scenario may be negative, and the gradient compensation torque in the motor output torque in the uphill scenario may be positive. For another example, a value of the gradient compensation torque may be determined based on the vehicle speed and a gradient value.

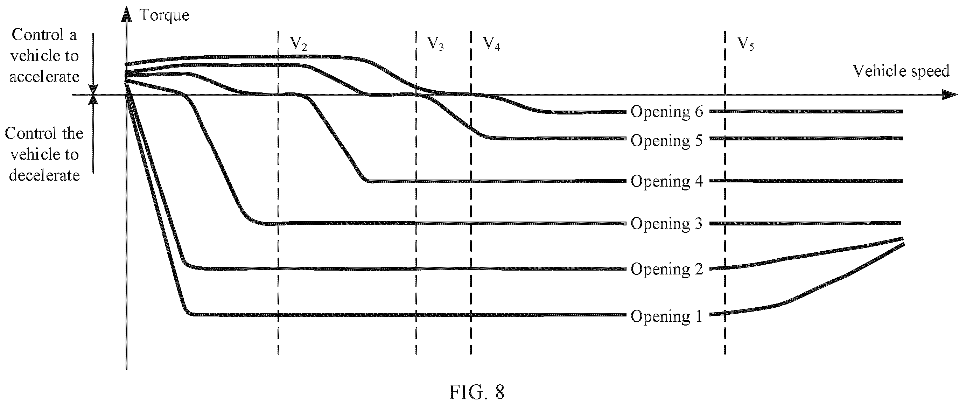

For example, the energy regeneration torque may be determined based on opening information of an accelerator pedal and vehicle speed information. The following describes a manner of determining the energy regeneration torque with reference to FIG. 8.

For example, FIG. 8 is a diagram of a manner of determining a driving intention based on an opening of an accelerator pedal according to an embodiment of this application.

For example, a driving intention of a driver may be determined based on opening information of an accelerator pedal. For example, a vehicle is in a single brake pedal mode. When a torque that the driver expects to apply to a wheel and that is determined based on an opening of an accelerator pedal is positive, it indicates that the driver has an intention of controlling the vehicle to accelerate. For another example, when a torque determined based on an opening of an accelerator pedal is negative, it indicates that the driver has an intention of controlling the vehicle to brake. In this case, the torque may be implemented in an energy regeneration manner, and may be referred to as an energy regeneration torque. For another example, in some possible implementations, when the vehicle determines, based on an opening of the accelerator pedal in a low-speed braking scenario, that the driver has a braking intention, and a determined negative torque may result from energy consumption by a motor, because the torque determined in this manner is independent of a gradient, even though the torque is not used for energy regeneration, the torque may still be referred to as an energy regeneration torque.

It is assumed that values of openings of the accelerator pedal increase sequentially from an opening 1 to an opening 6. For example, the opening 2 may be 5%, the opening 3 may be 10, the opening 6 may be 25%, and the like.

In an embodiment, as shown in FIG. 8, when a vehicle speed is greater than V4, a smaller opening of the accelerator pedal indicates a higher energy regeneration torque, and an energy regeneration torque corresponding to the opening 1 of the accelerator pedal is greater than an energy regeneration torque corresponding to the opening 6 of the accelerator pedal.

In another embodiment, an occasion for exiting and/or enabling an energy regeneration function may be determined based on the opening information of the accelerator pedal. For example, the opening of the accelerator pedal is the opening 6. When a vehicle speed is greater than V4, the energy regeneration function may be enabled in a braking process of the vehicle, and a target energy regeneration torque of the vehicle in the braking process may be determined based on a curve of a torque changing with the vehicle speed at the opening 6 shown in FIG. 8. For another example, the opening of the accelerator pedal is the opening 5. When a vehicle speed is greater than V3, the energy regeneration function may be enabled in a braking process of the vehicle, and a target energy regeneration torque of the vehicle in the braking process may be determined based on a curve of a torque changing with the vehicle speed at the opening 5 shown in FIG. 8. V3 may be less than V4. For another example, when a vehicle speed is less than or equal to V4 (for example, the vehicle speed is V2), when it is detected that the opening of the accelerator pedal is the opening 6, the vehicle may be controlled to accelerate. For example, V3 may be 50 km/h, 55 km/h, or another value; and V4 may be 65 km/h, 70 km/h, or another value.

In another embodiment, the energy regeneration torque may be determined with reference to performance of an electric brake mechanism. For example, as shown in FIG. 8, when a vehicle speed is greater than or equal to V5, an energy regeneration torque curve obtained when the accelerator pedal is at the opening 1 and the opening 2 may be determined with reference to an actuation characteristic of the electric brake mechanism. For example, the vehicle speed V5 may be 100 km/h, 110 km/h, or another value.

In another embodiment, a manner of determining the driving intention of the driver is used. When it is determined that the driver has a braking intention, a required braking torque may be determined based on a driving mode and/or user indication information.

It should be understood that the opening 1 to the opening 6 may alternatively be other values. For example, the opening 2 may be 7%, and the opening 6 may be 27%. This is not limited in embodiments of this application.

For example, for ease of calibration, a variation relationship between the energy regeneration torque and the opening of the accelerator pedal may be obtained through calibration when the vehicle travels in a flat-road scenario. Therefore, a target motor output torque of the vehicle in the flat-road scenario, an uphill scenario, or a downhill scenario may be determined with reference to a gradient compensation torque determined based on gradient information.

For example, when the vehicle speed is less than or equal to the first threshold (denoted as V1), if the opening of the accelerator pedal is less than or equal to a preset value (for example, 5% or 6%), the driver may have an intention to park the vehicle.

In an embodiment, to prevent the vehicle from rolling back in a parking phase, a motor output torque may be determined based on the gradient information and a first anti-rollback characteristic torque. For example, as shown in FIG. 7, in the uphill scenario, the first anti-rollback characteristic torque of the vehicle may be greater than 0, that is, a force corresponding to the torque is the same as a traveling direction of the vehicle; in the downhill scenario, the first anti-rollback characteristic torque of the vehicle may be less than 0, that is, a force corresponding to the torque is opposite to a traveling direction of the vehicle. For another example, the first anti-rollback characteristic torque may be determined based on the gradient information, vehicle load information, and the like. For another example, as shown in FIG. 7, a target motor output torque of the vehicle at the vehicle speed V1 may be smoothly transited to the first anti-rollback characteristic torque, to prevent the vehicle from rolling back when the vehicle parks. Because the energy regeneration torque is independent of a gradient, it may also be understood that a gradient compensation torque (briefly referred to as a first gradient compensation characteristic torque) at the vehicle speed V1 may be smoothly transited to the first anti-rollback characteristic torque. For another example, the first threshold may be 2 km/h, 2.5 km/h, or another value. This is not limited in embodiments of this application.

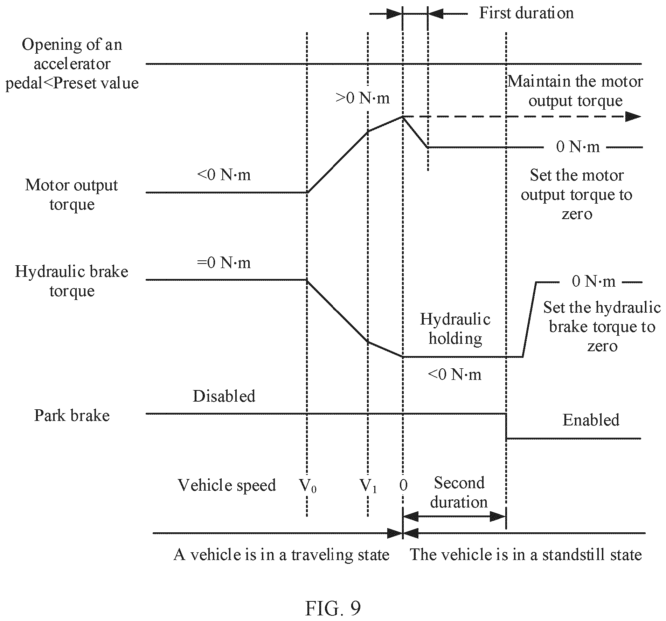

For example, FIG. 9 is a diagram of a method for controlling parking of a vehicle according to an embodiment of this application. A vehicle is in an uphill scenario.

For example, when it is determined that a driver has a parking intention, an electric brake mechanism and a hydraulic brake mechanism may be used to implement parking of the vehicle. For example, in a braking process in the uphill scenario shown in FIG. 9, when an opening of an accelerator pedal is less than a preset threshold, the vehicle may be controlled to continuously decelerate until a vehicle speed is 0. The preset threshold may be 3%, 4%, or another value.

For ease of understanding and description, it is assumed that the vehicle speed is greater than a second threshold before the vehicle brakes. The braking process may be divided into a plurality of phases based on an actuation manner of the brake mechanism in the braking process.

For example, in a phase 1, when the vehicle speed of the vehicle is greater than or equal to the second threshold, a motor output torque that can be provided by the electric brake mechanism may meet a required braking torque. In this phase, braking of the vehicle may be implemented based on only the motor output torque. In an embodiment, the motor output torque provided by the electric brake mechanism may be obtained by using the methods in FIG. 6 to FIG. 8. In another embodiment, the motor output torque that can be provided by the electric brake mechanism may be obtained based on a historical operating condition of the electric brake mechanism.

For example, in a phase 2, as the braking process proceeds, when the vehicle speed is less than the second threshold, the motor output torque may attenuate as the vehicle speed decreases in a manner shown in FIG. 7. To achieve consistency in braking effects, the hydraulic brake mechanism may be actuated, and the required braking torque is decomposed into a motor output torque and a hydraulic brake torque, to respectively control the electric brake mechanism and the hydraulic brake mechanism to actuate.

For example, in the phase 2, a required braking torque and a motor output torque at a vehicle speed may be determined based on vehicle speed information, and a hydraulic brake torque is obtained in, for example, the manner shown in FIG. 7. For example, an actual brake torque applied by the hydraulic brake system may be obtained, and the hydraulic brake torque is adjusted with reference to an actual braking effect of the hydraulic brake system, to implement closed-loop control over a hydraulic brake process.

For example, the phase 2 may be further divided into a phase 3 and a phase 4. A braking process in which the vehicle speed is less than the second threshold and greater than the first threshold may be referred to as a phase 3, and a braking process in which the vehicle speed is less than or equal to the first threshold and greater than zero may be referred to as a phase 4, as shown in FIG. 9.

For example, a motor output torque in the phase 4 may be determined based on a first anti-rollback characteristic torque of the vehicle, opening information of the accelerator pedal, and the gradient information. For example, in the manner shown in FIG. 7, a target motor output torque corresponding to a vehicle speed V1 may be smoothly transited to an anti-rollback torque. In this manner, a motor output torque in the phase 4 may be determined, and a hydraulic brake torque is determined with reference to a required braking torque. Based on the motor output torque in the phase 4, the electric brake mechanism is controlled to actuate, to prevent the vehicle from rolling back when the vehicle parks.

Optionally, in the phase 2, when the hydraulic brake torque fails, establishment of the motor output torque is not directly affected. When the vehicle speed is attenuated to zero, a positive torque may be maintained by using the electric brake mechanism, to prevent the vehicle from rolling back.

After the phase 2, the vehicle speed is attenuated to zero, and the vehicle is in a standstill state. The standstill state can also be divided into a plurality of phases.

For example, in a phase 5, the motor output torque is attenuated to zero. For example, as shown in FIG. 9, the motor output torque may be gradually attenuated until the motor output torque is set to zero. For another example, the motor output torque may be gradually attenuated to zero from a positive value according to a specific slope. For another example, the motor output torque may be set to zero after the motor output torque is maintained for a period of time. For another example, in this phase, the hydraulic brake torque may be maintained through hydraulic fluid replenishment, to prevent the vehicle from rolling back. Duration from a moment in which the vehicle speed of the vehicle is attenuated to 0 to a moment in which the motor output torque is set to 0 is referred to as first duration. The first duration may be any duration, for example, 30 seconds or 1 minute.

For example, when it is determined that the hydraulic brake mechanism is faulty or cannot meet an expected effect, the motor output torque may be maintained to prevent the vehicle from rolling back.

For example, in a phase 6, pressure of a brake fluid in the hydraulic brake mechanism is maintained by using the hydraulic brake mechanism, to keep the vehicle in the standstill state.

For example, in a phase 7, a park brake function is enabled and the hydraulic brake torque is set to zero. For example, the hydraulic brake torque may be set to zero when it is determined that the park brake function is successfully enabled. Duration from the moment in which the vehicle speed of the vehicle is attenuated to 0 to a moment in which the park brake function is enabled is referred to as second duration. The second duration is greater than the first duration. The second duration may be any duration, for example, 5 minutes or 10 minutes.

For example, when it is determined that the park brake function is faulty, the pressure of the brake fluid in the hydraulic brake mechanism may be maintained to prevent the vehicle from rolling back.

It should be understood that the braking process and/or the standstill state of the vehicle may include some or all of the foregoing phases 1 to 7. For example, before the vehicle brakes, when the vehicle speed of the vehicle is less than the second threshold, the braking process of the vehicle may not include the phase 1. For another example, a user may step down the accelerator pedal in the phase 5 or the phase 6 to control the vehicle to continue to travel. In this case, the phase 7 may not be included.

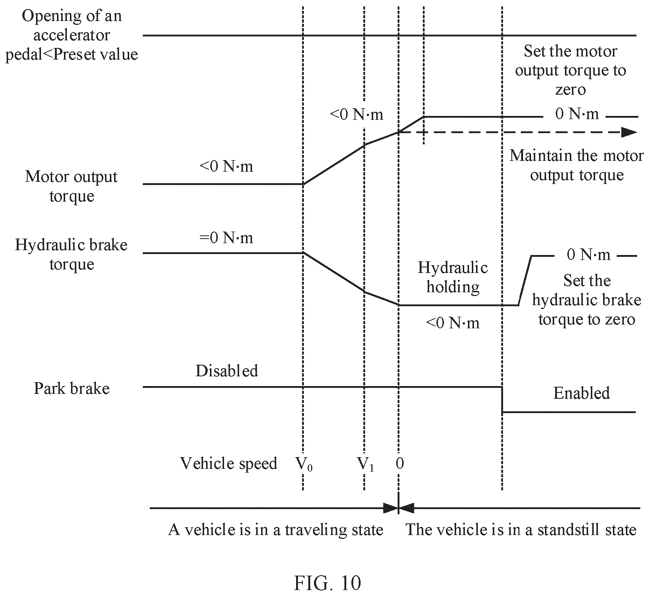

For example, FIG. 10 is a diagram of another method for controlling parking of a vehicle according to an embodiment of this application. A vehicle is in a downhill scenario.

For example, in a braking process in the downhill scenario shown in FIG. 10, when it is determined that a driver has a parking intention, the vehicle may be controlled to continuously decelerate until a vehicle speed is 0. Similarly to FIG. 9, the braking process and a parking process of the vehicle may be divided into a plurality of phases.

In an embodiment, due to impact of a gradient, there is a difference between a variation relationship between a motor output torque and the vehicle speed in a phase 2 shown in FIG. 10 and an attenuation manner of the motor output torque in the phase 2 in the uphill scenario shown in FIG. 9. For example, the variation relationship between the motor output torque and the vehicle speed may be determined with reference to the method shown in FIG. 6.

In another embodiment, because an anti-rollback torque of the vehicle in the downhill scenario is different from that in the uphill scenario, in a phase 5 shown in FIG. 10, in a process in which the motor output torque is set to zero, the motor output torque may be gradually attenuated from a negative value to 0, which is different from the process in which the motor output torque is set to zero in the uphill scenario shown in FIG. 9.

In another embodiment, in a phase 1, a phase 6, and a phase 7 shown in FIG. 10, control over an electric brake mechanism, a hydraulic brake mechanism, and/or a park brake function may be similar to corresponding phases in FIG. 9.

According to the method in this embodiment of this application, the driver can control a deceleration and parking process of the vehicle by releasing an accelerator pedal.

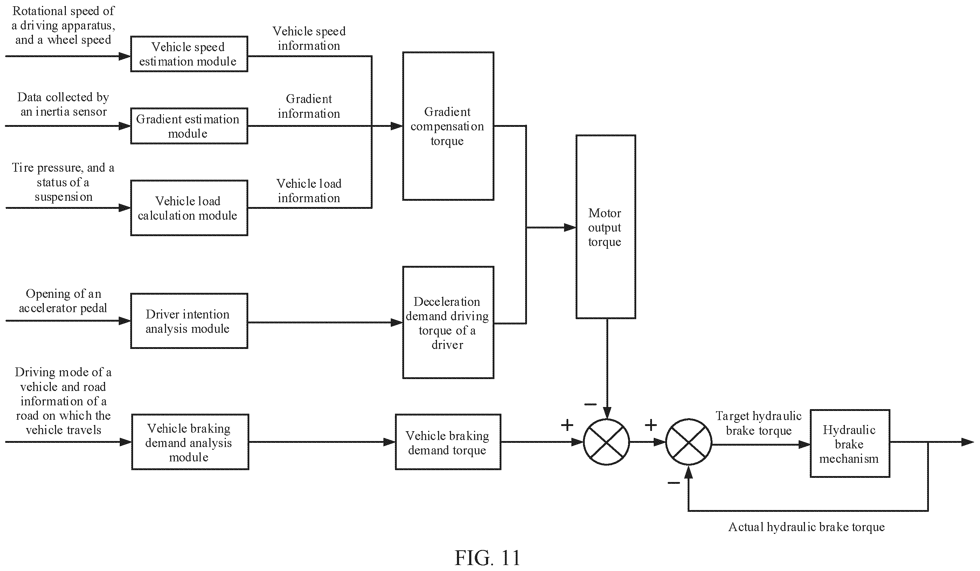

For example, FIG. 11 is a diagram of a process of controlling a hydraulic brake mechanism according to an embodiment of this application. The following briefly describes the modules in FIG. 11.

For example, a vehicle speed estimation module may be configured to determine vehicle speed information. For example, the vehicle speed estimation module may estimate a vehicle speed of the vehicle based on information such as a rotational speed of a driving apparatus of the vehicle and a wheel speed of the vehicle.

For example, a vehicle load calculation module may be configured to determine vehicle load information. In an embodiment, a vehicle load may be estimated based on a vehicle weight. In another embodiment, the vehicle load may be calculated with reference to tire pressure. In another embodiment, the vehicle may monitor a status of a suspension, and may calculate the vehicle load with reference to status information of the suspension.

For example, a gradient calculation module may be configured to determine gradient information of a location of the vehicle. In an embodiment, the gradient information may be determined based on data collected by sensors such as a gradient sensor and an inertia sensor of the vehicle. In another embodiment, a gradient of the location of the vehicle may be calculated with reference to the rotational speed of the driving apparatus of the vehicle and the vehicle speed. In another embodiment, the gradient information of the location of the vehicle may be determined based on map information.

For example, a gradient compensation torque may be determined based on the vehicle speed information and the gradient information. In some possible implementations, the gradient compensation torque may also be determined with reference to an actual load of the vehicle. In this way, a motor output torque may be determined with reference to a deceleration demand torque of a driver and the gradient compensation torque.

For example, a driver intention analysis module may be configured to determine a driving intention of the driver. For example, based on the manner shown in FIG. 8, whether the driver has a braking intention may be determined based on an opening of an accelerator pedal, and when the driver has a deceleration intention, the deceleration demand torque of the driver may be determined.

For example, a vehicle braking requirement analysis module may be configured to determine a required braking torque of the vehicle.

In an embodiment, the required braking torque of the vehicle may be determined based on a driving mode of the vehicle and/or user indication information. In another embodiment, road information of a road on which the vehicle is located may be obtained, for example, an asphalt road or a cement road, or an urban road, a rural road, or an expressway. The required braking torque of the vehicle may be determined based on the road information.

When the motor output torque cannot meet the required braking torque, a hydraulic brake torque may be determined based on the motor output torque and the required braking torque, and based on the hydraulic brake torque, the hydraulic brake mechanism is controlled to actuate.

In another embodiment, an actual brake torque applied by the hydraulic brake mechanism may be obtained at a specific frequency, and a target hydraulic brake torque is adjusted based on an actual operating condition of the hydraulic brake mechanism. For example, when the actual hydraulic brake torque is greater than the target hydraulic brake torque, the target hydraulic brake torque may be reduced, and the hydraulic brake mechanism is controlled, based on a value obtained through adjustment, to actuate. In other words, closed-loop control over the hydraulic brake mechanism can be implemented through negative feedback, so that a braking effect of the hydraulic brake mechanism can match an expected braking effect.

In some possible implementations, the foregoing embodiments may be combined with each other.

In an embodiment, the computing platform 150 shown in FIG. 1 may include the vehicle speed estimation module, the vehicle load calculation module, the gradient calculation module, the driver intention analysis module, and the vehicle braking requirement analysis module.

In another embodiment, the control module 210 shown in FIG. 2 may include some or all of the vehicle speed estimation module, the vehicle load calculation module, the gradient calculation module, the driver intention analysis module, and the vehicle braking requirement analysis module.

Optionally, a brake function of the vehicle may be jointly implemented by a plurality of control apparatuses, or chips, processors, and the like in the plurality of control apparatuses. In other words, the control module 210 shown in FIG. 2 may include a plurality of control apparatuses. For example, the vehicle may include a plurality of control apparatuses, for example, a vehicle domain controller (vehicle domain controller, VDC), an intelligent integrated brake system (international peace bureau, IPB), and a motor control unit (motor control unit, MCU).

For example, the vehicle domain controller may exchange information with a plurality of apparatuses such as an IPB, an MCU, and an IVI, to control the vehicle. For example, a target motor control torque may be sent to the MCU to control a motor to actuate. For another example, the target hydraulic brake torque may be indicated to the IPB to control the hydraulic brake mechanism to actuate.

For example, the vehicle may include a motor. The motor may implement braking of the vehicle, or may be configured to drive the vehicle to travel. The motor may be controlled by the MCU. In other words, the MCU may control an energy conversion apparatus in an electric brake mechanism.

In an embodiment, the MCU may obtain the target motor control torque from the VDC, and then control the motor, based on the target motor control torque, to actuate. When the vehicle is controlled to brake, the target motor control torque may be the target motor output torque in FIG. 3 to FIG. 10.

In another embodiment, the MCU may send an actual motor torque to the VDC, so that the VDC can implement closed-loop control over actuation of the motor with reference to the actual motor torque.

In another embodiment, in a braking process of the vehicle, the motor actuates reversely to convert kinetic energy of the vehicle into electric energy.

In another embodiment, the vehicle may include a plurality of motors. For example, a front motor and a rear motor are configured to drive a front wheel and a rear wheel of the vehicle respectively. The plurality of motors may correspond to one or more MCUs.

For example, the intelligent integrated brake system may include a control apparatus such as a chip and a processor, and may further include a hydraulic brake mechanism such as a brake wheel cylinder.

In an embodiment, the intelligent integrated brake system may include a brake torque arbitration module and a target pressure build-up module. The brake torque arbitration module may be configured to determine whether the target hydraulic brake torque indicated by the VDC is proper. The target pressure build-up module may be configured to adjust, based on the target hydraulic brake torque indicated by the VDC, pressure of a brake fluid in the hydraulic brake mechanism such as the brake wheel cylinder, to implement braking of the vehicle.

In another embodiment, the control module 210 shown in FIG. 2 may include a control apparatus in an intelligent integrated control system, or may include a VDC; the hydraulic brake mechanism shown in FIG. 2 may include a hydraulic brake mechanism in the intelligent integrated control system; and the electric brake mechanism shown in FIG. 2 may include a motor controlled by an MCU.

Optionally, the vehicle may include an advanced driver assistance system (advanced driver assistance system, ADAS) or an autonomous driving system. In an embodiment, when the ADAS or the autonomous driving system is enabled, the ADAS or the autonomous driving system can determine information such as a vehicle driving torque and a vehicle brake torque.

For example, the vehicle may also include an in-vehicle infotainment (in-vehicle infotainment, IVI) system, to implement interaction between the vehicle and a user. For example, the IVI may obtain a voice instruction of the user through voice interaction. For another example, a user instruction may be obtained by detecting an input of the user on a central control screen. For another example, a user instruction is obtained by detecting an input of the user on a physical/virtual button/key.

For example, the vehicle may learn of the driving intention of the user based on opening information of the accelerator pedal and/or opening information of a brake pedal.

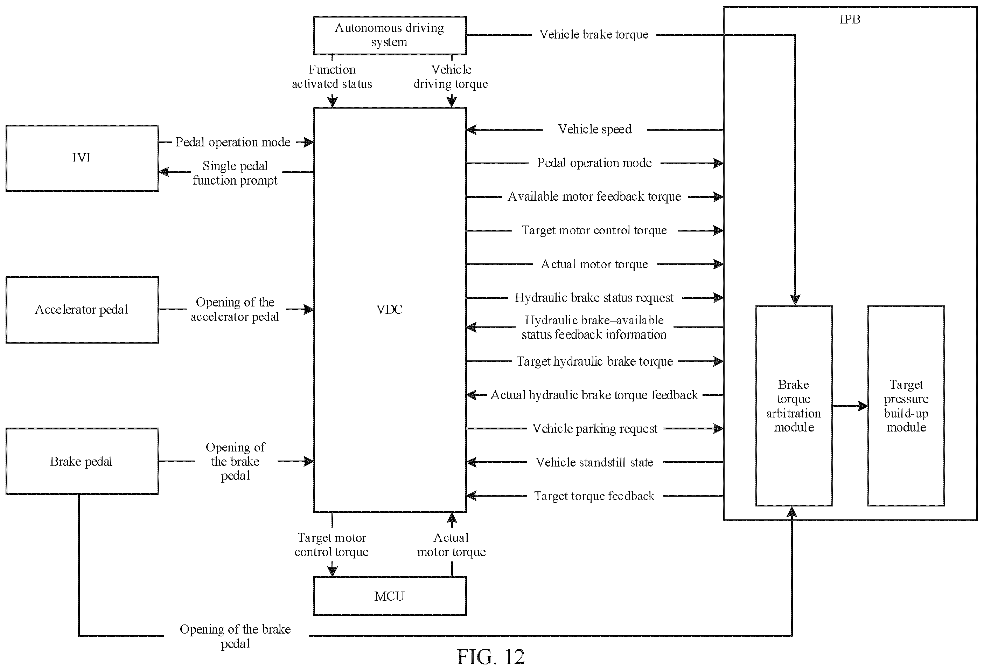

The following describes, with reference to FIG. 12, a process of controlling braking of a vehicle. For example, FIG. 12 is a diagram of a process of controlling braking of a vehicle according to an embodiment of this application.

For example, the vehicle may support a plurality of pedal operation modes, for example, a single pedal mode and a dual pedal mode. For example, when a vehicle is in the dual pedal mode, a VDC and/or an IPB may control, based on opening information of a brake pedal, the vehicle to brake, or a VDC may control, based on information about an accelerator pedal, a drive mechanism of the vehicle to actuate. For another example, when the vehicle is in the single pedal mode, a VDC may control, based on opening information of an accelerator pedal, a motor to drive the vehicle to travel, or implement braking of the vehicle. For another example, in the dual pedal mode, an IPB may send a target torque feedback to a VDC based on an opening of a brake pedal, to indicate the VDC to perform energy regeneration; and in the single pedal mode, an IPB may not send a target torque feedback to a VDC, or a VDC may not respond after receiving a target torque feedback.

For example, when detecting that a user selects a pedal operation mode of the vehicle, the IVI may indicate a function of the single pedal mode to the user, to avoid a false selection by the user. The IVI may send indication information to the VDC, to indicate a pedal operation mode selected by the user.

For example, based on the pedal operation mode selected by the user, the vehicle is controlled to be in the single pedal mode or the dual pedal mode. When the vehicle is in the single pedal mode, the VDC may determine a driving intention of a driver based on the opening information of the accelerator pedal. When it is determined that the driver has a braking intention, a required braking torque may be determined based on a driving mode, and whether a motor output torque can meet the required braking torque is determined. When the motor output torque is less than or equal to the required braking torque, the VDC may send indication information to the IPB, to indicate the IPB to control a hydraulic brake mechanism to actuate.

In an embodiment, the VDC may send a hydraulic brake status request to the IPB, to request to obtain an operating status of a hydraulic brake system. Correspondingly, the IPB may send hydraulic brake-available status feedback information to the VDC based on the hydraulic brake status request, to feed back the available status of the hydraulic brake system.

In another embodiment, the VDC may determine, based on the required braking torque and the motor output torque, a hydraulic brake torque required to meet a braking demand of the vehicle, and send, to the IPB, a target hydraulic brake torque required to meet the required braking torque. Correspondingly, the IPB may receive the hydraulic brake torque, and control, based on the hydraulic brake torque, the hydraulic brake mechanism to actuate. For example, the IPB may implement the braking process in the phase 2 shown in FIG. 9 or FIG. 10 by using the hydraulic brake mechanism.

In another embodiment, the IPB may obtain an actual brake torque applied by the hydraulic brake mechanism in the braking process, and feed back the brake torque to the VDC. The VDC may adjust, based on the brake torque, the hydraulic brake torque that is required to meet the braking demand and that is sent to the IPB, so that closed-loop control over hydraulic braking can be implemented, and continuity of vehicle deceleration can be implemented.

In another embodiment, the IPB may obtain information such as a pedal operation mode, a target motor control torque, and an actual motor torque, to determine whether the information indicated by the VDC is proper. For example, based on the information, the IPB may determine whether the hydraulic brake torque indicated by the VDC is proper. For another example, the IPB may also obtain an available motor feedback torque, to learn of limitation information of the motor in use. For another example, the IPB may obtain the information from the VDC, or may obtain the information from another controller by using an internal circuit of the vehicle.

For example, when a vehicle speed is less than or equal to a first threshold, the VDC may send a vehicle parking request to the IPB; and correspondingly, the IPB may perform parking control based on the parking request. For example, the VDC may smoothly transit a current motor output torque to a first anti-rollback characteristic torque, determine a hydraulic brake torque based on the required braking torque, and separately indicate a corresponding torque to the MCU and the IPB, so that the braking process in the phase 4 in FIG. 9 or FIG. 10 can be implemented. For another example, after determining that the vehicle parks, the IPB may control the hydraulic brake mechanism to perform hydraulic holding for preset duration, or enable an electrical park brake function after a trigger condition of another electrical park brake (electrical park brake, EPB) function is met, so that a standstill state in the phase 5 and/or the phase 6 in FIG. 9 or FIG. 10 can be implemented. For another example, after it is determined that the park brake function of the vehicle is enabled, the hydraulic brake torque may be set to zero, so that a standstill state in the phase 7 in FIG. 9 or FIG. 10 can be implemented.

For example, according to the embodiments in FIG. 4 to FIG. 12, the method 300 shown in FIG. 3 may be implemented or the method 300 may be extended.

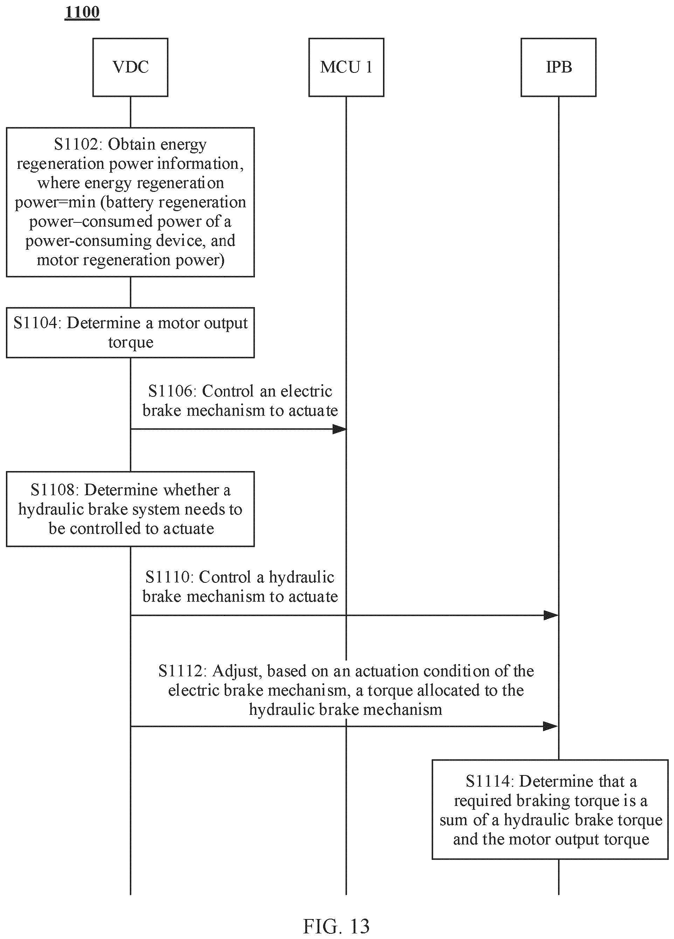

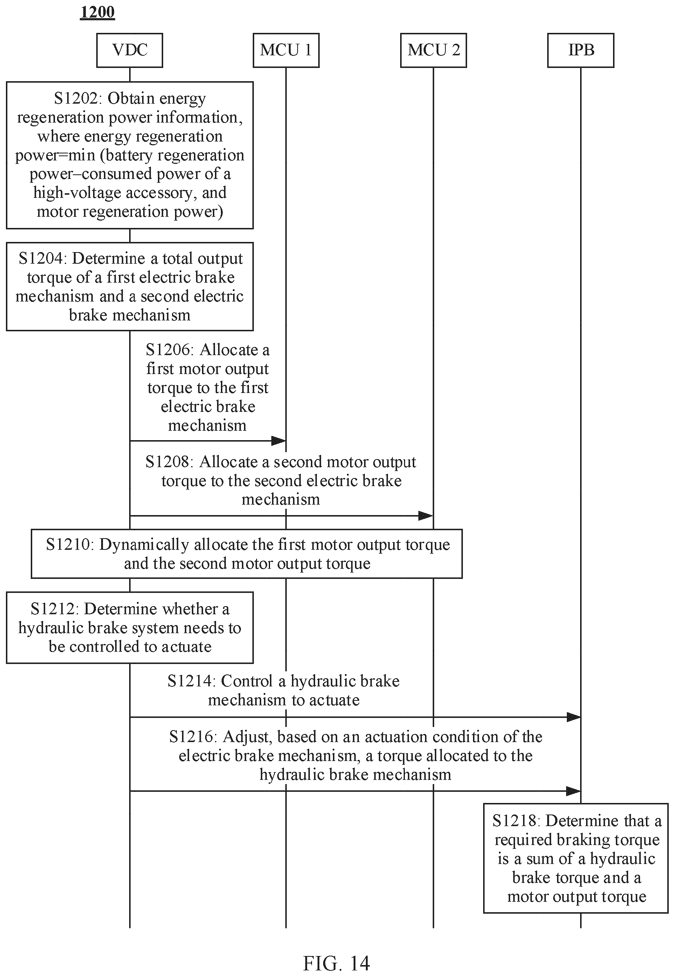

The following describes, with reference to FIG. 13 and FIG. 14, a control method in a case in which actuation of a brake mechanism is limited. The methods shown in FIG. 13 and FIG. 14 may be understood as an extension of the method 300 shown in FIG. 3.

For example, FIG. 13 is a schematic flowchart of another control method according to an embodiment of this application. The method 1100 may be applied to a vehicle including only one electric brake mechanism. For example, the electric brake mechanism includes a motor 1, and the motor 1 is controlled by an MCU 1. The method 1100 may include the following steps.

S1102: Obtain energy regeneration power information.

For example, an energy regeneration power may be determined based on a battery regeneration power, a motor regeneration power, and a consumed power of a power-consuming device of a vehicle. For example, the energy regeneration power may be a minimum value of the motor regeneration power and a difference between the battery regeneration power and the consumed power of the power-consuming device, and the minimum value may be denoted as: energy regeneration power=min (battery regeneration power-consumed power of the power-consuming device, and motor regeneration power).

In some possible implementations, in an actual scenario, because there may be many power-consuming devices in the vehicle, to simplify calculation of the energy regeneration power, when a consumed power of a power-consuming device is determined, only a consumed power of a device that consumes a high power may be considered. In an embodiment, a consumed power of a power-consuming device that consumes a low power may be ignored, or a consumed power may be estimated based on a preset value.

S1104: Determine a motor output torque.

For example, when an energy regeneration function is not limited, the motor output torque may be determined based on gradient information and opening information of an accelerator pedal.

For example, an energy regeneration torque may be determined based on the energy regeneration power.

In an embodiment, the energy regeneration torque may be determined based on the energy regeneration power, a vehicle mass, and a vehicle load. For example, energy regeneration torque=energy regeneration power/(vehicle mass+vehicle load).

In another embodiment, when the vehicle load is small, the energy regeneration torque may be determined based on the energy regeneration power and the vehicle mass. For example, energy regeneration torque=energy regeneration power/vehicle mass.

In another embodiment, when the energy regeneration torque is determined, a specific safety margin may also be considered. For example, energy regeneration torque=(energy regeneration power-preset margin)/vehicle mass. For another example, energy regeneration torque=preset coefficient×energy regeneration power/vehicle mass, where the preset coefficient may be any value between 0 and 1.

For example, when a torque that can be provided by the electric brake mechanism can meet a required braking torque of the vehicle, only the electric brake mechanism may be actuated.

In an embodiment, when a vehicle speed of the vehicle is greater than a second threshold, it may be considered that a torque that can be provided by the electric brake mechanism when energy regeneration is not limited can meet the required braking torque. When energy regeneration is limited, it may be determined whether the energy regeneration torque can meet a required braking torque. For example, in a phase 1 shown in FIG. 9 or FIG. 10, based on a minimum value of the energy regeneration torque and the required braking torque, the electric brake mechanism may be controlled to actuate, and the minimum value may be denoted as: motor output torque=min (required braking torque and energy regeneration torque).

In another embodiment, when a vehicle speed of the vehicle is less than or equal to a second threshold, and energy regeneration is not limited, the electric brake mechanism and a hydraulic brake mechanism may be combined to implement braking of the vehicle. When energy regeneration is limited, the motor output torque may be determined based on the gradient information, the information about the accelerator pedal, and the energy regeneration power information. For example, based on a minimum value of the energy regeneration torque and a target motor output power #1 that is determined based on the gradient information and the information about the accelerator pedal, the electric brake mechanism may be controlled to actuate, and the minimum value may be denoted as: motor output torque=min (target motor output power #1 and energy regeneration torque).

S1106: Control the electric brake mechanism to actuate.

For example, a VDC may indicate the motor output torque to an MCU, and the MCU may control, based on the motor output torque, the motor 1 to actuate.

S1108: Determine whether the hydraulic brake system needs to be controlled to actuate.

For example, the vehicle speed of the vehicle is greater than the second threshold.

In an embodiment, when the energy regeneration torque is greater than or equal to the required braking torque, it may be considered that the electric brake mechanism can still meet the required braking torque when energy regeneration is limited, and the hydraulic brake system does not need to be actuated.

In another embodiment, when the energy regeneration torque is less than the required braking torque, it may be considered that the electric brake mechanism cannot meet the required braking torque due to impact of limited energy regeneration, the hydraulic brake mechanism may be combined to control braking of the vehicle, and then step S1110 may be performed. For example, a hydraulic brake torque #1 may be equal to a difference between the required braking torque and the energy regeneration torque, and based on the hydraulic brake torque #1, the hydraulic brake mechanism is controlled to actuate.

For example, the vehicle speed of the vehicle is less than the second threshold.

In an embodiment, when the energy regeneration torque is greater than or equal to the target motor output power #1, it may be considered that when energy regeneration is limited, the electric brake mechanism can still implement the target motor output power #1 allocated to the electric brake mechanism. A hydraulic brake torque #2 allocated to the hydraulic brake mechanism may be equal to a difference between the required braking torque and the target motor output power #1. In this case, step S1110 may be performed.

In another embodiment, when the energy regeneration torque is less than the target motor output power #1, a torque allocated to the hydraulic brake mechanism should be greater than the hydraulic brake torque #2, to meet a braking demand. For example, the hydraulic brake torque allocated to the hydraulic brake mechanism may be equal to a difference between the required braking torque and the energy regeneration torque. In this case, step S1110 may be performed.

Optionally, S1110: Control the hydraulic brake system to actuate.

For example, the VDC may indicate, to an IPB, the torque allocated to the hydraulic brake mechanism, and the IPB may control, based on the torque, the hydraulic brake system to actuate.

It should be understood that step S1106 and steps S1108 and S1110 may be performed simultaneously, or step S1106 may be performed first, or step S1108 may be performed first. This is not limited in embodiments of this application.

Optionally, S1112: Adjust, based on an operating condition of the electric brake mechanism, the torque allocated to the hydraulic brake mechanism.

For example, the VDC may obtain an actual brake torque of the motor 1. When a difference between the actual brake torque and a motor output torque indicated by the VDC is greater than or equal to a preset threshold (for example, 200 N·m or 300 N·m), and duration is greater than preset duration (for example, 200 milliseconds or 300 milliseconds), it may be considered that the motor 1 cannot meet a current target motor output torque. In this case, an operating condition of the motor 1 and the required braking torque may be used to control the hydraulic brake mechanism to actuate.

Optionally, S1114: Determine that the required braking torque is a sum of the hydraulic brake torque and the motor output torque.

For example, the IPB may obtain the required braking torque and the motor output torque through an internal circuit of the vehicle, and may determine that the required braking torque is a sum of the hydraulic brake torque and the motor output torque. This ensures that an expected braking effect can be achieved.

Optionally, when the hydraulic brake mechanism is faulty, or an actual brake torque of the hydraulic brake mechanism cannot reach, within preset duration, the hydraulic brake torque allocated by the VDC to the IPB, the user may be informed that a function of a single pedal is limited.

For example, FIG. 14 is a schematic flowchart of another control method according to an embodiment of this application. The method 1200 may be applied to a vehicle including a plurality of electric brake mechanisms. The plurality of electric brake mechanisms may include a motor 1 and a motor 2, and the motor 1 and the motor 2 may be controlled by different motor control units. For example, the motor 1 is controlled by an MCU 1, and the motor 2 is controlled by an MCU 2. The method 1200 may include the following steps.

S1202: Obtain energy regeneration power information.

For example, an energy regeneration power may be determined based on a battery regeneration power, a consumed power of a power-consuming device, a regeneration power of the motor 1, and a regeneration power of the motor 2.

S1204: Determine a total output torque of a first electric brake mechanism and a second electric brake mechanism.

For example, when an energy regeneration function is not limited, the total output torque of the first electric brake mechanism and the second electric brake mechanism may be determined based on gradient information and opening information of an accelerator pedal.

For example, when a torque that can be provided by the first electric brake mechanism and/or the second electric brake mechanism can meet a required braking torque of the vehicle, only the first electric brake mechanism or the second electric brake mechanism may actuate, or both the first electric brake mechanism and the second electric brake mechanism may actuate.

In an embodiment, when a vehicle speed of the vehicle is greater than a second threshold, it may be considered that the total torque that can be provided by the first electric brake mechanism and the second electric brake mechanism can meet the required braking torque. When energy regeneration is limited, a minimum value of an energy regeneration torque and the required braking torque may be used as the total output torque of the first electric brake mechanism and the second electric brake mechanism (which may also be briefly referred to as total output torque of the electric brake mechanism), to control the first electric brake mechanism and the second electric brake mechanism to actuate.

In another embodiment, when a vehicle speed is less than or equal to a second threshold, and energy regeneration is not limited, the total output torque of the electric brake mechanism may be determined based on the opening information of the accelerator pedal and the gradient information, and a hydraulic brake mechanism is combined to actuate the electric brake mechanism. When energy regeneration is limited, a minimum value of an energy regeneration torque and the total output torque that is of the electric brake mechanism and that is determined based on the gradient information and the information about the accelerator pedal may be used as the total output torque for controlling the electric brake mechanism to actuate.

S 1206: Allocate a first motor output torque to the first electric brake mechanism.

S 1208: Allocate a second motor output torque to the second electric brake mechanism.

For example, based on the total output torque of the electric brake mechanism, the first motor output torque is allocated to the first electric brake mechanism, and the second motor output torque is allocated to the second electric brake mechanism. The total output torque may be equal to a sum of the first electrical brake torque and the second electric brake torque.

For example, allocation may be performed according to a preset condition. The preset condition may be set in a vehicle development process, or may be determined based on user indication information.

S1210: Dynamically allocate the first motor output torque and the second motor output torque.

For example, when an actual brake torque of the first electric brake mechanism or the second electric brake mechanism cannot meet a target brake torque allocated to the first electric brake mechanism or the second electric brake mechanism, the first motor output torque and the second motor output torque may be dynamically adjusted based on the total output torque.

Optionally, S1212: Determine whether the hydraulic brake system needs to be controlled to actuate.

For example, when the total output torque cannot meet the required braking torque, it may be determined that the hydraulic brake system needs to be controlled to actuate. A torque allocated to the hydraulic brake system may be determined based on the required braking torque.

It should be understood that step S1204 and step S1212 may be performed simultaneously, or step S1204 may be performed first, or step S1212 may be performed first. This is not limited in embodiments of this application.

Optionally, S1214: Control the hydraulic brake mechanism to actuate.

Optionally, S1216: Adjust, based on an operating condition of the electric brake mechanism, a torque allocated to the hydraulic brake mechanism.

Optionally, S1218: Determine that the required braking torque is a sum of a hydraulic brake torque and the motor output torque.

For example, for step S 1214 to step S1218, refer to step S1110 to step S1114.

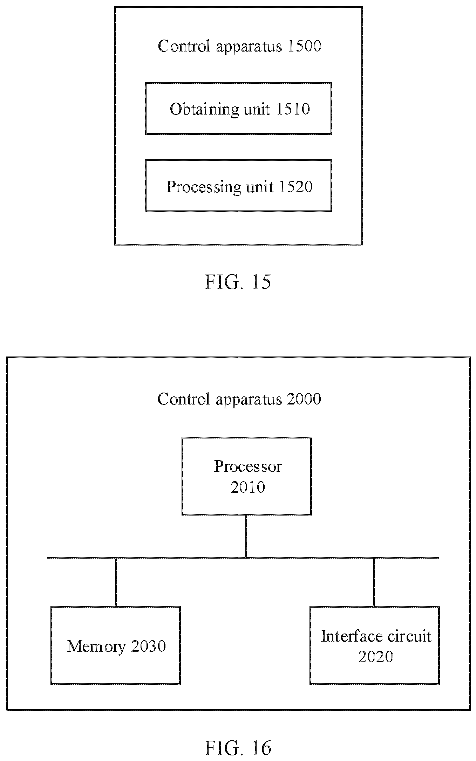

The methods provided in embodiments of this application are described above in detail with reference to FIG. 3 to FIG. 14. Apparatuses provided in embodiments of this application are described below in detail with reference to FIG. 15 and FIG. 16. Descriptions of apparatus embodiments correspond to descriptions of the method embodiments. Therefore, for content that is not described in detail, refer to the foregoing method embodiments.

For example, FIG. 15 is a block diagram of a control apparatus 1500 (briefly referred to as an apparatus 1500 below) according to an embodiment of this application. The apparatus may include an obtaining unit 1510 and a processing unit 1520.

The apparatus 1500 may include units for performing any one of the methods in FIG. 3 to FIG. 14, and the units in the apparatus 1500 may be configured to perform a corresponding procedure in any one of the method embodiments in FIG. 3 to FIG. 14.

When the apparatus 1500 is configured to perform the method 300 in FIG. 3, the obtaining unit 1510 may be configured to perform step S310 in the method 300, and the processing unit 1520 may be configured to perform steps S320 and S330 in the method 300.

Specifically, the obtaining unit 1510 may be configured to obtain opening information of an accelerator pedal of a vehicle and gradient information; and the processing unit 1520 may be configured to: determine a motor output torque based on the opening information of the accelerator pedal and the gradient information; and determine a first hydraulic brake torque based on a required braking torque and the motor output torque.

In an embodiment, the control module 210 shown in FIG. 2 may include the apparatus 1500, and the vehicle may be the intelligent driving device 100 shown in FIG. 1. In another embodiment, the apparatus 1500 may be a vehicle domain controller, or may be a chip, a processing circuit, or the like included in the vehicle domain controller.

Optionally, the motor output torque includes an energy regeneration torque and a gradient compensation torque. The processing unit 1520 may be configured to: determine the energy regeneration torque based on the opening information of the accelerator pedal and vehicle speed information; and determine the gradient compensation torque based on the gradient information.

Optionally, the processing unit 1520 may be configured to determine the gradient compensation torque based on the gradient information and the vehicle speed information.

Optionally, the obtaining unit 1510 may be further configured to obtain a first anti-rollback characteristic torque, where the first anti-rollback characteristic torque is a torque required to prevent the vehicle from rolling back when the vehicle parks. The processing unit 1520 may be configured to: determine the gradient compensation torque based on the gradient information when a vehicle speed is greater than or equal to a first threshold; or determine the gradient compensation torque based on the gradient information and the first anti-rollback characteristic torque when a vehicle speed is less than a first threshold.

Optionally, the processing unit 1520 may be configured to determine a variation relationship between the gradient compensation torque and the vehicle speed based on a first gradient compensation characteristic torque and the first anti-rollback characteristic torque, where the first gradient compensation characteristic torque is a gradient compensation torque needed when the vehicle speed of the vehicle is equal to the first threshold; and determine the gradient compensation torque based on the vehicle speed information and the variation relationship between the gradient compensation torque and the vehicle speed when the vehicle speed is less than the first threshold.

Optionally, the obtaining unit 1510 may be further configured to obtain energy regeneration power information. The processing unit 1520 may be configured to determine the energy regeneration torque based on the opening information of the accelerator pedal, the vehicle speed information, and the energy regeneration power information.

Optionally, the vehicle includes a first electric brake mechanism and a second electric brake mechanism. The processing unit 1520 may be further configured to: based on the motor output torque, allocate a first motor output torque to the first electric brake mechanism and allocate a second motor output torque to the second electric brake mechanism; and based on operating conditions of the first motor output torque and the second motor output torque, adjust the first motor output torque allocated to the first electric brake mechanism and adjust the second motor output torque allocated to the second electric brake mechanism.

Optionally, the vehicle includes a hydraulic brake system. The processing unit 1520 may be further configured to control, based on the first hydraulic brake torque and the hydraulic brake system, braking of the vehicle.

Optionally, the obtaining unit 1510 may be further configured to obtain a first brake torque, where the first brake torque is a brake torque applied by the hydraulic brake system to the vehicle. The processing unit 1520 may be configured to control braking of the vehicle through the hydraulic brake system based on the first hydraulic brake torque and the first brake torque.

Optionally, the processing unit 1520 may be further configured to determine the required braking torque based on a driving mode of the vehicle and/or user indication information.

Optionally, the processing unit 1520 may be further configured to: when an opening of the accelerator pedal is less than or equal to a preset threshold, control, based on the motor output torque and the first hydraulic brake torque, braking of the vehicle until the vehicle is in a standstill state; and set the motor output torque to zero when duration in which the vehicle is in the standstill state is greater than or equal to first duration.

Optionally, the processing unit 1520 may be further configured to: when the duration in which the vehicle is in the standstill state is greater than or equal to second duration, enable a park brake function, and set the first hydraulic brake torque to zero, where the second duration is greater than the first duration.

Optionally, the processing unit 1520 may be further configured to determine, based on the gradient information, a variation relationship between the motor output torque and the vehicle speed.

It should be understood that division into units of the foregoing apparatus is merely logical function division. During actual implementation, all or a part of the units may be integrated into one physical entity, or may be physically separated. All the units of the foregoing apparatus may be implemented in the form of software invoked by the processor, or may be implemented in the form of the hardware circuit, or some of the units are implemented in the form of software invoked by the processor, and remaining units are implemented in the form of the hardware circuit.

In a specific implementation process, the obtaining unit 1510 may be implemented by at least one transceiver or a transceiver-related circuit, and the processing unit 1520 may be implemented by at least one processor or a processor-related circuit. In an example, one or more processors may determine the motor output torque based on the opening information of the accelerator pedal and the gradient information. In an example, one or more processors may determine the first hydraulic brake torque based on the motor output torque and the required braking torque. For example, in a specific implementation process, the apparatus 1500 may belong to the control module 210 shown in FIG. 2, or the apparatus 1500 may be disposed in the intelligent driving device 100 (for example, the intelligent driving device 100 may be a vehicle), or the apparatus 1500 may be an in-vehicle infotainment disposed in the vehicle or another vehicle-mounted terminal. For example, in a specific implementation process, the apparatus 1500 may be a processor or a chip disposed in an in-vehicle infotainment, or may be a processor or a chip disposed in another vehicle-mounted terminal. In another example, the intelligent driving device shown in FIG. 1 is a vehicle, and the apparatus 1500 may be the computing platform 150 shown in FIG. 1.

For example, FIG. 16 is a block diagram of another control apparatus 2000 (briefly referred to as an apparatus 2000 below) according to an embodiment of this application. The apparatus 2000 may include a processor 2010, an interface circuit 2020, and a memory 2030. The processor 2010, the interface circuit 2020, and the memory 2030 are connected through an internal connection path. The memory 2030 is configured to store instructions. The processor 2010 is configured to execute the instructions stored in the memory 2030, to receive/send some parameters through the interface circuit 2020. Optionally, the memory 2030 may be coupled to the processor 2010 through an interface, or may be integrated with the processor 2010.

In an embodiment, the apparatus 2000 may be disposed in a vehicle. In another embodiment, the apparatus 2000 may be disposed on the computing platform 150 shown in FIG. 1. In another embodiment, the apparatus 2000 may belong to the control module 210 shown in FIG. 2.

It should be noted that the interface circuit 2020 may include but is not limited to a transceiver apparatus such as an input/output interface (input/output interface), to implement communication between the apparatus 2000 and another device or a communication network.

The interface circuit 2020 may be configured to implement communication between the apparatus 2000 and another device or a communication network. For example, information collected by a sensor may be obtained through the interface circuit 2020, and an execution apparatus of the vehicle may be controlled to perform a corresponding operation.

An embodiment of this application further provides a computer program product. The computer program product includes computer program code. When the computer program code is run on a computer, the computer is enabled to perform any one of the methods in FIG. 3 to FIG. 14 and any possible implementation of the methods.

An embodiment of this application further provides a computer-readable storage medium. The computer-readable storage medium stores program code or instructions. When the computer program code or the instruction is/are executed by a processor of a computer, the processor is enabled to implement any one of the methods in FIG. 3 to FIG. 14 and any possible implementation of the methods.

An embodiment of this application further provides a chip, including a circuit, configured to perform any one of the methods in FIG. 3 to FIG. 14 and any possible implementation of the methods.

An embodiment of this application further provides a vehicle. The vehicle includes the apparatus 1500 or the apparatus 2000.

It should be understood that, for the purpose of convenient and brief description, for a detailed working process and beneficial effects of the foregoing system, apparatus, and unit, refer to a corresponding process in the foregoing method embodiments. Details are not described herein again.

The terms used in embodiments of this application are merely for the purpose of describing specific embodiments, but are not intended to limit this application. The terms "one", "a", "the", "the foregoing", and "this" of singular forms used in this specification and the appended claims of this application are also intended to include expressions such as "one or more", unless otherwise specified in the context clearly. It should be further understood that in the following embodiments of this application, "at least one" and "one or more" refer to one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computing device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, comprising:
obtaining opening information of an accelerator pedal of a vehicle and gradient information;
determining a motor output torque based on the opening information of the accelerator pedal and the gradient information; and
determining a first hydraulic brake torque based on a required braking torque and the motor output torque.

2. The method according to claim 1, wherein the motor output torque comprises an energy regeneration torque and a gradient compensation torque; and
the determining a motor output torque based on the opening information of the accelerator pedal and the gradient information comprises:
determining the energy regeneration torque based on the opening information of the accelerator pedal and vehicle speed information; and
determining the gradient compensation torque based on the gradient information.

3. The method according to claim 2, wherein the determining the gradient compensation torque based on the gradient information comprises:
determining the gradient compensation torque based on the gradient information and the vehicle speed information.

4. The method according to claim 2 or 3, wherein the method further comprises:
obtaining a first anti-rollback characteristic torque, wherein the first anti-rollback characteristic torque is a torque required to prevent the vehicle from rolling back when the vehicle parks; and
the determining the gradient compensation torque based on the gradient information comprises:
determining the gradient compensation torque based on the gradient information when a vehicle speed is greater than or equal to a first threshold; or
determining the gradient compensation torque based on the gradient information and the first anti-rollback characteristic torque when a vehicle speed is less than the first threshold.

5. The method according to claim 4, wherein the determining the gradient compensation torque based on the gradient information and the first anti-rollback characteristic torque when a vehicle speed is less than the first threshold comprises:
determining a variation relationship between the gradient compensation torque and the vehicle speed based on a first gradient compensation characteristic torque and the first anti-rollback characteristic torque, wherein the first gradient compensation characteristic torque is a gradient compensation torque needed when the vehicle speed of the vehicle is equal to the first threshold; and
determining the gradient compensation torque based on the vehicle speed information and the variation relationship between the gradient compensation torque and the vehicle speed when the vehicle speed is less than the first threshold.

6. The method according to any one of claims 2 to 5, wherein the method further comprises:
obtaining energy regeneration power information; and
the determining the energy regeneration torque based on the opening information of the accelerator pedal and vehicle speed information comprises:
determining the energy regeneration torque based on the opening information of the accelerator pedal, the vehicle speed information, and the energy regeneration power information.

7. The method according to any one of claims 2 to 6, wherein the vehicle comprises a first electric brake mechanism and the second electric brake mechanism; and the method further comprises:
based on the motor output torque, allocating a first motor output torque to the first electric brake mechanism and allocating a second motor output torque to the second electric brake mechanism; and
based on operating conditions of the first motor output torque and the second motor output torque, adjusting the first motor output torque allocated to the first electric brake mechanism and adjusting the second motor output torque allocated to the second electric brake mechanism.

8. The method according to any one of claims 1 to 7, wherein the vehicle comprises a hydraulic brake system; and the method further comprises:
controlling braking of the vehicle through the hydraulic brake system based on the first hydraulic brake torque.

9. The method according to any one of claims 1 to 8, wherein the method further comprises:
determining the required braking torque based on a driving mode of the vehicle and/or user indication information.

10. The method according to any one of claims 1 to 9, wherein the method further comprises:
when an opening of the accelerator pedal is less than or equal to a preset threshold, controlling, based on the motor output torque and the first hydraulic brake torque, braking of the vehicle until the vehicle is in a standstill state; and
setting the motor output torque to zero when duration in which the vehicle is in the standstill state is greater than or equal to first duration.

11. The method according to claim 10, wherein the method further comprises:
when the duration in which the vehicle is in the standstill state is greater than or equal to second duration, enabling a park brake function, and setting the first hydraulic brake torque to zero, wherein the second duration is greater than the first duration.

12. A control apparatus, wherein the apparatus comprises:
an obtaining unit, configured to obtain opening information of an accelerator pedal of a vehicle and gradient information; and
a processing unit, configured to: determine a motor output torque based on the opening information of the accelerator pedal and the gradient information; and
determine a first hydraulic brake torque based on the required braking torque and the motor output torque.

13. The apparatus according to claim 12, wherein the motor output torque comprises an energy regeneration torque and a gradient compensation torque; and
the processing unit is configured to:
determine the energy regeneration torque based on the opening information of the accelerator pedal and vehicle speed information; and
determine the gradient compensation torque based on the gradient information.

14. The apparatus according to claim 13, wherein the processing unit is configured to:
determine the gradient compensation torque based on the gradient information and the vehicle speed information.

15. The apparatus according to claim 13 or 14, wherein the obtaining unit is further configured to:
obtain a first anti-rollback characteristic torque, wherein the first anti-rollback characteristic torque is a torque required to prevent the vehicle from rolling back when the vehicle parks; and
the processing unit is configured to:
determine the gradient compensation torque based on the gradient information when a vehicle speed is greater than or equal to a first threshold; or
determine the gradient compensation torque based on the gradient information and the first anti-rollback characteristic torque when a vehicle speed is less than the first threshold.

16. The apparatus according to claim 15, wherein the processing unit is configured to:
determine a variation relationship between the gradient compensation torque and the vehicle speed based on a first gradient compensation characteristic torque and the first anti-rollback characteristic torque, wherein the first gradient compensation characteristic torque is a gradient compensation torque needed when the vehicle speed of the vehicle is equal to the first threshold; and
determine the gradient compensation torque based on the vehicle speed information and the variation relationship between the gradient compensation torque and the vehicle speed when the vehicle speed is less than the first threshold.

17. The apparatus according to any one of claims 13 to 16, wherein the obtaining unit is further configured to:
obtain energy regeneration power information; and
the processing unit is configured to:
determine the energy regeneration torque based on the opening information of the accelerator pedal, the vehicle speed information, and the energy regeneration power information.

18. The apparatus according to any one of claims 13 to 17, wherein the vehicle comprises a first electric brake mechanism and the second electric brake mechanism, and the processing unit is further configured to:
based on the motor output torque, allocate a first motor output torque to the first electric brake mechanism and allocate a second motor output torque to the second electric brake mechanism; and
based on operating conditions of the first motor output torque and the second motor output torque, adjust the first motor output torque allocated to the first electric brake mechanism and adjust the second motor output torque allocated to the second electric brake mechanism.

19. The apparatus according to any one of claims 12 to 18, wherein the vehicle comprises a hydraulic brake system, and the processing unit is further configured to:
control braking of the vehicle through the hydraulic brake system based on the first hydraulic brake torque.

20. The apparatus according to any one of claims 12 to 19, wherein the processing unit is further configured to:
determine the required braking torque based on a driving mode of the vehicle and/or user indication information.

21. The apparatus according to any one of claims 12 to 20, wherein the processing unit is further configured to:
when an opening of the accelerator pedal is less than or equal to a preset threshold, control, based on the motor output torque and the first hydraulic brake torque, braking of the vehicle until the vehicle is in a standstill state; and
set the motor output torque to zero when duration in which the vehicle is in the standstill state is greater than or equal to first duration.

22. The apparatus according to claim 21, wherein the processing unit is further configured to:
when the duration in which the vehicle is in the standstill state is greater than or equal to second duration, enable a park brake function, and set the first hydraulic brake torque to zero, wherein the second duration is greater than the first duration.

23. An apparatus, comprising:
a memory, configured to store a computer program; and
a processor, configured to execute the computer program stored in the memory, to enable the apparatus to perform the method according to any one of claims 1 to 11.

24. A vehicle, comprising the apparatus according to any one of claims 12 to 23.

25. A computer-readable storage medium, wherein the computer-readable storage medium stores a computer program, and when the computer program is executed by a computer, the method according to any one of claims 1 to 11 is implemented.

26. A computer program product, wherein the computer program product comprises computer program code, and when the computer program code is run on a computer, the control method according to any one of claims 1 to 11 is performed.
